(19) Europäisches Patentamt
European Patent Office
Office européen des brevets

(11) EP 1 186 638 B1

(12) **EUROPEAN PATENT SPECIFICATION**

(45) Date of publication and mention of the grant of the patent:
**07.06.2006 Bulletin 2006/23**

(51) Int Cl.:
*C09D 11/00* (2006.01) *C09D 11/02* (2006.01)

(21) Application number: **01300768.7**

(22) Date of filing: **29.01.2001**

(54) **Use of a printing ink, printing method and printed packaging material**

Verwendung einer Druckfarbe, Druckverfahren und bedrucktes Verpackungsmaterial

Utilisation d'un encre pour l'impression, PROCEDE D'IMPRESSION et matériau d'emballage imprimé

(84) Designated Contracting States:
**DE FR GB**

(30) Priority: **04.08.2000 JP 2000237482**

(43) Date of publication of application:
**13.03.2002 Bulletin 2002/11**

(73) Proprietor: **TOYO SEIKAN KAISHA LIMITED**
**Tokyo (JP)**

(72) Inventors:
- **Goto, Hiroaki**
  **Tokyo (JP)**
- **Murakami, Shigenobu**
  **Yokohama-shi,**
  **Kanagawa-ken (JP)**
- **Takasaki, Yasuhiro**
  **Yokohama-shi,**
  **Kanagawa-ken (JP)**

(74) Representative: **Bailey, David Martin**
**Brookes Batchellor,**
**102-108 Clerkenwell Road**
**London EC1M 5SA (GB)**

(56) References cited:
**EP-A- 0 633 299**
**EP-A- 1 013 724**
**US-A- 5 213 618**
**US-A- 5 672 200**
**US-A- 5 925 178**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 186 638 B1

## Description

(Technical Field)

The present invention relates to a printing ink having excellent brilliancy and excellent ink transfer property. More specifically, the invention relates to a printing ink which forms, on a to-be-printed material, a printed ink layer having a bright and deep brilliancy maintaining a good ink transfer property, and to a printing method using the printing ink. The invention further relates to a printed packaging material having bright and deep brilliancy offering particular and useful ornamental nature and excellent commercial value.

(Background Art)

On the outer surfaces of a packaging material are printed the contents, images and origin in a fascinating design as well as various other items for enhancing the commercial appeal.
The printed packaging material (can) has a structure in cross section as shown in, for example, Fig. 1 (known example): i.e., a metallic base member 1, an underlying layer 2 called white or size on the outer surface thereof, a printed ink layer 3 and a finishing varnish layer 4 which are successively formed.
The printed ink layer may be formed by using an ink which contains brilliant pigments such as aluminum flakes and a pearl pigment coated with fine particles in order to impart brilliancy.
It has further been known already to use, as a can barrel, a metal blank on which a gravure-printed film is laminated. For example, Japanese Unexamined Patent Publication (Kokai) No. 41740/1995 discloses a polyester film for covering a can material by being heat-adhered onto a metal plate for cans via a thermoplastic resin adhesive, the polyester film having, on one surface thereof, a printed layer of a resin composition containing a pearl pigment formed by gravure-printing and having a thermosetting resin adhesive formed on the printed layer thereof.
Metal cans can be roughly divided into three-piece cans having a side seam on the can barrel and seamless cans without seam on the can barrel. In the former three-piece can, the blank (sheet) of before being molded is printed. In the latter seamless can, the blank is deformed by the plastic flow at the time of draw-forming, draw-ironing, or draw-bend-elongation-ironing. In many cases, therefore, the can barrel after molded is printed.
So far, the sheets and seamless cans have been printed by using a printing plate in combination with a blanket for receiving an ink layer from the printing plate and transferring it onto the can barrel.
As the printing plate, there have been used a lithograph and a letterpress.
In printing the to-be-printed materials such as sheets and seamless cans by using a printing ink containing aluminum flakes and a brilliant pigment such as pearl pigment coated with fine particles, however, it often happens that the brilliancy is not sufficient, the ink is not sufficiently transferred from the printing plate to the blanket or the ink is not sufficiently transferred from the blanket to the to-be-printed material, deteriorating the reproduceability of printing.
In the former printed can, the printed ink layer is generally applied onto the surface of the can body. When the ink contains a brilliant pigment, however, the dispersed median diameter of the brilliant pigment in the ink is as small as 5 μm or less. Therefore, the ink layer lacks brightness and the obtained ornamental effect is not still satisfactory.
The reasons can be classified roughly into two. First, a brilliant pigment having large particle diameters tends to stay at an end of the roll while the ink is being transferred hindering the smooth transfer of the ink, and it is forced to use a brilliant pigment having small particle diameters. Second, the median diameter decreases as the printing ink is kneaded by the roller.
In the case of the latter printed cans, on the other hand, the brilliancy is high requiring, however, complex steps. When applied to the two-piece cans, further, a problem arouses concerning the workability of the film-wrapped portions.

(Disclosure of the Invention)

It is therefore an object of the present invention to provide a printing ink which forms a printed ink layer that exhibits excellent brilliancy, which can be excellently transferred, and makes it possible to effect the printing maintaining good reproduceability.
Another object of the present invention is to provide a printing method capable of printing images on a to-be-printed material such as a sheet or a metal can maintaining excellent brilliancy and excellent reproduceability.
A further object of the present invention is to provide a printed packaging material having bright and deep brilliancy offering particular and useful ornamental nature and excellent commercial value.
According to the present invention, there is provided the use of printing ink containing from 5 to 40% by weight of at least one brilliant pigment selected from the group consisting of aluminum flakes and a pearl pigment coated with fine particles and having an average particle diameter (as measured by a laser scattering method) of from 5 to 25 μm and, particularly, from 5 to 20 μm, and the printing ink further having an apparent viscosity $\eta_{100}$ of not larger than 2

Pa·sec at 35°c and at a shearing rate of 100 $sec^{-1}$ in a printing method which uses a printing plate having a JISA hardress of not larger than 90 degrees, transfers a printing ink on the printing plate onto a blanket, and transfers the printing ink on the blanket onto a to-be-prinket material.

In the printing ink of the present invention, it is desired that the weight reduction ratio is not larger than 30% when it is left to stand in an open atmosphere at 22°C for one hour and, further, that the printing ink contains transparent fine particles having an average particle diameter of from 0.01 to 1 μm.

According to the present invention, there is further provided a printing method by transferring a printing ink on a printing plate onto a blanket and transferring the printing ink on the blanket onto a to-be-printed material, the printing ink containing from 5 to 40% by weight of at least one brilliant pigment selected from the group consisting of aluminum flakes and a pearl pigment coated with fine particles and having an average particle diameter of from 5 to 25 μm, and the printing ink further having an apparent viscosity $\eta_{100}$ of not larger than 2 Pa·sec at 35°C and at a shearing rate of 100 $sec^{-1}$. Preferably, the printing ink is sucked and is fed to the printing plate by using an engraved roller.

According to the present invention, further, there is provided a printed packaging member obtained by the method in which a printed ink layer is formed containing a brilliant pigment selected from the group consisting of aluminum flakes and a pearl pigment coated with fine particles, and a clear coating is formed on the printed ink layer, the printed ink layer having an average film thickness of from 0.2 to 10 μm, preferably, from 0.3 to 3 μm and, most preferably, from 0.5 to 2 μm, the brilliant pigment particles present in the printed ink layer having an average particle diameter (D) of from 3 to 20 μm as calculated from the areas thereof, and the area ratio (S) occupied by the brilliant pigment particles being not smaller than 10%.

In the packaging material of the present invention, it is desired that the average particle diameter (D) and the area ratio (S) satisfy a relationship, $D^2 \times S \geqq 300$.

Brief Description of Drawings:

Fig. 1 is a sectional view illustrating, in cross section, the structure of a conventional printed packaging material (can);
Fig. 2 is a sectional view illustrating, in cross section, the structure of a can used in the present invention;
Fig. 3 is a sectional view illustrating, in cross section, another structure of a can used in the present invention;
Fig. 4 is a side view schematically illustrating the arrangement of a printer used in the production of the printed packaging member of the present invention; and
Fig. 5 is a side view schematically illustrating the arrangement of another printer used in the production of the printed packaging member of the present invention.

Best Mode for Carrying Out the Invention:

[Printing Ink]

A printing ink according to the present invention contains at least one brilliant pigment selected from the group consisting of aluminum flakes and a pearl pigment coated with fine particles.

An aluminum flake pigment present in the printing ink works to bounce the incident light in a metallic manner, i.e., bounces the incident light by the front surfaces thereof. A pearl luster flake pigment reflects the incident light in a multiplicity of ways to impart a particular interference color thereto. Both of these pigments have a common nature in imparting a brilliant appearance to the printed ink layer.

In the printing ink of the invention, it is important that the brilliant pigment has an average particle diameter (as measured by a laser scattering method) in a range of from 5 to 25 μm from the standpoint of developing bright and well-balanced brilliancy.

That is, in order to obtain excellent brilliancy, the brilliant pigment particles must have a predetermined size.

As will be described later, the printed ink layer as a whole becomes dark when the average particle diameter of the brilliant pigment becomes smaller than the above range, and brilliancy tends to be insufficient (Comparative Example 1). When the average particle diameter exceeds the above range, on the other hand, a difference becomes conspicuous between the portions having the brilliant pigment and the portions without the brilliant pigment, and well-balanced brilliancy is not obtained (Comparative Example 2).

It is also important that the brilliant pigment exists in the ink at a concentration of from 5 to 40% by weight. That is, when the concentration of the brilliant pigment becomes smaller than the above range, brilliancy tends to become insufficient compared with when the concentration lies within the above range (Comparative Example 3). When the concentration of the brilliant pigment exceeds the above range, on the other hand, the ink is transferred very poorly compared with when the concentration lies within the above range, and it becomes difficult to obtain a favorably printed

matter maintaining high brilliancy (Comparative Example 4).

It is particularly important that the printing ink of the present invention has an apparent viscosity $\eta_{100}$ of not larger than 2 Pa·sec at 35°C and at a shearing rate of 100 $sec^{-1}$.

The conditions for measuring the apparent viscosity were selected to be at 35°C and at a shearing rate of 100 $sec^{-1}$ because of the reason that these conditions are close to the practical printing conditions.

The apparent viscosity $\eta_{100}$ is closely related to both the transfer property of the printing ink and the development of brilliancy.

When the apparent viscosity $\eta_{100}$ exceeds 2 Pa·sec, the ink deposits on the printing plate, and the printing is effected in a thickly deposited state, causing the pictue to become thick and deteriorating the printing reproduceability as demonstrated in Comparative Example 5 appearing later.

The brilliant pigment has a flat particulate shape even when it is an aluminum flake pigment or a pearl pigment coated with fine particles. The particles are oriented in parallel with the printed surface to develop the most excellent brilliancy. When the apparent viscosity $\eta_{100}$ exceeds the above range however, the orientation of the brilliant pigment particles is impaired and the brilliancy is deteriorated.

In the present invention, the ink must be smoothly transferred from the printing plate to the blanket and from the blanket to the printing surface of the to-be-printed material.

For this purpose, it is desired that the weight reduction ratio of the printing ink is not larger than 30% when it is left to stand in an open atmosphere at 22°C for one hour. When the weight reduction ratio exceeds 30% by weight, the printing ink deposits on the printing plate and on the blanket, and the ink tends to be poorly transferred onto the to-be-printed material (Comparative Example 6).

It is desired that the printing ink of the present invention contains transparent fine particles having an average particle diameter of from 0.01 to 1 μm. Upon containing the transparent fine particles in the printing ink, the brilliant pigment particles easily disperses in the coating material contributing to strikingly increasing the brilliancy and vividness of the printed ink layer, and improving the transfer property of the ink.

The brilliant pigment used in the present invention comprises an aluminum flake pigment and/or a pearl pigment coated with fine particles, and has an average particle diameter (median diameter) in the range as described above as found by the light scattering method.

These brilliant pigment particles are all flat and tend to be oriented in parallel with the direction of the plane at the time of printing to exhibit a particular metallic luster or a pearl-like luster.

The scale of flatness of the brilliant pigment is, usually, expressed by an aspect ratio by dividing the average particle diameter by the thickness of the particles. In order to maintain a high degree of orientation at the time of printing, it is desired that the aspect ratio is in a range of from 10 to 500.

As the aluminum flakes, there have been known those of the leafing type and those of the nonleafing type. The aluminum flakes of the leafing type are treated with a higher fatty acid such as stearic acid and tend to float on the surface of the ink layer lacking, however, glittering to some extent. The aluminum flakes of the nonleafing type, on the other hand, do not float on the surface of the ink layer and exhibit glittering depending upon the angle from which one views. In the present invention, both of them can be used. It is, however, desired to use the aluminum flakes of the nonleafing type. As desired, the flakes of the leafing type may also be used being mixed together.

It is also allowable to use so-called colored aluminum flakes by adhering fine particles and coloring substances to the aluminum flakes to produce metallic feeling of a particular color tone.

As the pearl pigment coated with fine particles, there can be used any known pearl pigment coated with fine particles and, particularly preferably, there can be used a mica-titanium pigment. Production of an interference chromatic color will now be described with reference to the mica-titanium pigment. The mica-titanium pigment comprises a mica base having a large aspect ratio and a layer of fine particles of titanium dioxide (hereinafter also referred to simply as titanium layer) formed on the surfaces of the mica body.

When a ray of light falls on the mica-titanium pigment, a ray of light falling on and reflected by the surface of the titanium layer interferes with a ray of light falling on and reflected by the interface of titanium layer and mica substrate, thereby to produce interference light.

There exists a predetermined relationship between the thickness of the titanium layer and the chromatic color produced by the interference of light as tabulated below.

| Color | Optical distance (nm) | Geometrical thickness (nm) | $TiO_2$ per 1 m2 (mg) |
|---|---|---|---|
| Silver | 96 | 35 | 85 |
| Pale gold | 150 | 59 | 145 |
| Gold | 175 | 71 | 163 |
| Red | 250 | 95 | 186 |

Table continued

| Color | Optical distance (nm) | Geometrical thickness (nm) | $TiO_2$ per 1 m2 (mg) |
|---|---|---|---|
| Violet | 297 | 117 | 231 |
| Blue | 325 | 129 | 250 |
| Green | 358 | 145 | 275 |
| 2nd-order gold | 412 | 161 | 320 |
| 2nd-order violet | 487 | 194 | 385 |

The mica-titanium pigment is a titanium dioxide obtained by using flake-like crystals of mica ($3Al_2O_3 \cdot K_2O \cdot 6SiO_2 \cdot nH_2O$) as nuclei, and precipitating a hydrate of titanium oxide on the nuclei followed by firing. The titanium dioxide layer on the surface may be either of the anatase type or the rutile type.

The mica has a feature in that it assumes a flake-like crystalline form having a cleaving property, a thickness of not larger than 1 μm and an aspect ratio of not smaller than 50. Upon forming a thin layer of titanium pigment having a large refractive index on the surfaces thereof, mica produces chromatic interference colors as tabulated above depending upon the thickness of the layer thereof.

[Printing Ink Composition]

The printing ink used in the present invention is obtained by dispersing the above brilliant pigment in a vehicle and additives together, as required, with any coloring agents.

As the vehicle, there can be used an oil, a resin, a solvent or a plasticizer.

As the oil, there can be used a linseed oil which is a drying oil, a boiled linseed oil, a soybean oil which is a semi-drying oil, and a castor oil in one kind or in combination. These oils are further used for modifying the resins that will be described later.

As the resin, there can be used a natural resin such as rosin, modified rosin or gilsonite, or a synthetic resin such as phenol resin, alkyd resin, xylene resin, urea resin, melamine resin, polyester resin, polyamide resin, acrylic resin, epoxy resin, ketone resin, benzoguanamine resin, petroleum resin, vinyl chloride resin, vinyl acetate resin, chlorinated polypropylene, chlorinated rubber, cyclized rubber, or cellulose derivative, which may be used in one kind or in a combination of two or more kinds.

As the solvent, there can be used toluene, methyl ethyl ketone (MEK) or solvent naphtha.

As the plasticizer, there can be used the one of the phthalic acid ester type, adipic acid ester type, citric acid ester type or polyester type.

As the additives, there can be used natural or synthetic waxes, drying agent, dispersant, wetting agent, crosslinking agent gelling agent, viscosity-increasing agent, lining-preventing agent, stabilizer, delustering agent, defoaming agent and photopolymerization initiator.

As the coloring agents, there can be used known dyes and pigments. Preferred examples are as follows:

(Black pigment)

Carbon black, acetylene black, lamp black, aniline black, Nigrosine black.

(Yellow pigment)

Zinc yellow, cadmium yellow, yellow iron oxide, mineral fast yellow, nickel titanium yellow, naples yellow, naphthol yellow S, Hansa Yellow G, Hansa Yellow 10G, benzidine yellow G, benzidine yellow GR, quinoline yellow lake, permanent yellow NCG and Tartrazine Lake.

(Orange pigment)

Chrome orange, molybdenum orange, permanent orange GTR, pyrazolone orange, Vulcan orange, indanthrene brilliant orange RK, benzidene orange G, and indanthrene brilliant orange GK.

(Red pigment)

Red iron oxide, cadmium red, red lead, cadmium mercury sulfide, permanent red 4R, Lithol Red, pyrazolone

red, watching red calcium salt, lake red D, Brilliant Carmine 6B, eosine lake, Rhodamine Lake B, Alizaline Lake, and Brilliant Carmine 3B.

(Violet pigment)

Manganese violet, Fast violet B, methyl violet lake.

(Blue pigment)

Prussian blue, cobalt blue, alkali blue lake, victoria blue lake, phthalocyanine blue, metal-free phthalocyanine blue, partly chlorinated product of phthalocyanine blue, fast sky blue, and indanthrene blue BC.

(Green pigment)

Chrome green, chromium oxide, pigment green B, Malachite Green Lake and Final Yellow Green G.

(White pigment)

Zinc flower, titanium oxide, antimony white and zinc sulfate.

(Body)

Baryte powder, barium carbonate, clay, silica, white carbon, talc, and alumina white.
It is desired to use flush pigments from the standpoint of dispersion property.
The ink vehicle that is used may be either of the type of being cured by heating or of the type of being cured with ultraviolet rays.
As the one of the type of being cured by heating, there can be preferably used an ink employing a vehicle of the alkyd type or of the polyester type.
The alkyd type or the polyester type vehicle is a resin obtained by the polymerization-condensation of:

(i) at least one kind of a polyhydric alcohol such as glycerine, pentaerythritol, ethylene glycol, diethylene glycol, triethylene glycol, propylene glycol, sorbitol, mannitol or trimethylolpropane; with
(ii) at least one kind of a polybasic acid such as phthalic anhydride, isophthalic acid, maleic acid, fumaric acid, sebacic acid, adipic acid, citric acid, tartaric acid, malic acid, diphenic acid, 1,8-naphthalic acid, terpin oil or rosin; and
(iii) as required, modifying the reaction product with fat and oil or fatty acid, such as linseed oil, soybean oil, sesame oil, fish oil, tung oil, sunflower oil, walnut oil, oiticica oil, castor oil, dehydrated castor oil, distilled fatty acid, cotton seed oil, coconut oil, or fatty acid thereof, or a monoglyceride of fatty acid.

The resin may be further used in the form of being modified with rosin, modified with non-drying fatty acid, modified with urea melamine resin, modified with drying fatty acid, modified with carbolic acid resin, modified with maleic acid resin, modified with ester rosin, or modified with any other natural resin.
As a curing agent, there can be used metal soaps of various metals such as lead, cobalt, zinc or manganese, or naphthenate.
As other examples of the heat-curing type, there can be favorably used those obtained by dissolving resins such as amino resin or acrylic resin in a reactive diluent such as polyfunctional acrylic monomer or the like. As required, the vehicle compositions may be used in combination with a heat polymerization initiator.
As the polyfunctional acrylic monomer, there can be used a (meth)acrylate of a polyhydric alcohol modified with an alkene oxide having two or more and, particularly, three or more (meth)acryloyl groups in the molecule, and represented by the following formula (1),

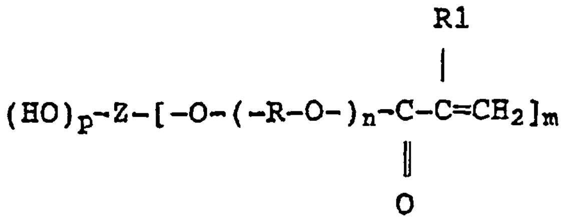

wherein Z is a residue of the polyhydric alcohol, R is an alkylene group having 2 to 4 carbon atoms, R1 is a hydrogen atom or a methyl group, n is a number of not smaller than 1, m is a number of not smaller than 2 and, particularly, not smaller than 3, and p is a number of not larger than 1 inclusive of 0.

As the polyhydric alcohol from which the (meth)acrylate of the above formula (1) is derived, there can be exemplified trimethylolpropane, ditrimethylolpropane, pentaerythritol, dipentaerythritol, glycerin, diglycerin, trimethylolethane, ditrimethylolethane, erythritol, xylitol, mannitol and sorbitol to which only, however, the polyhydric alcohol is in no way limited.

As the alkylene oxide used for modifying the polyhydric alcohol, there can be preferably used ethylene oxide. However, there can be used other alkylene oxides such as propylene oxide as a matter of course.

As the heat polymerization initiator, there can be used an organic peroxide or an azo compound.

As the organic peroxide, there can be exemplified dicumyl peroxide, di-t-butyl peroxide, 2,5-dimethyl-2,5-bis (t-butylperoxy)hexane, 2,5-dimethyl-2,5-bis(t-butylperoxy)hexyne-3,1,3-bis(t-butylperoxyisopropyl)benzene, 1,1-bis(t-butylperoxy)valerate, benzoyl peroxide, t-butylperoxybenzoate, acetyl peroxide, isobutyl peroxide, octanoyl peroxide, decanoyl peroxide, lauroyl peroxide, 3,3,5-trimethylhexanoyl peroxide, 2,4-dichlorobenzoylperoxide and m-toluyl peroxide.

As the azo compound, there can be exemplified azoisobutylonitrile and dimethylazoisobutylonitrile.

The one which is cured with ultraviolet rays may be either the one of the ultraviolet-ray radical polymerization type or the ultraviolet-ray cation polymerization type.

The one of the ultraviolet-ray radical polymerization type may be used in combination with an acrylic monomer or prepolymer and a photo radical polymerization catalyst. As the acrylic monomer or prepolymer, there is used a monomer or a prepolymer having plural (meth)acryloyl groups in the molecules, or a mixture thereof.

Representative examples of the photo radical polymerization catalyst include benzoin and alkyl ethers thereof, acetophenones, anthraquinones, thioxanthones, ketals, benzophenones and xanthones.

As the one of the ultraviolet-ray cation polymerization type, there can be used, for example, an ultraviolet ray-curing epoxy resin and a photo cation polymerization catalyst in combination.

The ultraviolet ray-curing epoxy resin contains an epoxy resin component having an alicyclic group in the molecules and in which neighboring carbon atoms of the alicyclic group are forming an oxylane ring. There can be used epoxy compounds having at least one epoxycycloalkane group such as epoxycyclohexane ring or epoxycyclopentane ring in the molecules, in one kind or in a combination of two or more kinds.

Preferred examples include vinylcyclohexene diepoxide, vinylcyclohexene monoepoxide, 3,4-epoxycyclohexylmethyl, 3,4-epoxycyclohexane carboxylate, 2-(3,4-epoxycyclohexyl-5,5-spiro-3,4-epoxy)cyclohexane-m-dioxane, bis (3,4-epoxycyclohexyl)adipate and limonene dioxide.

The cationic ultraviolet ray polymerization initiator used in combination with the epoxy resin is the one which is decomposed with ultraviolet rays to emit Lewis acid that works to polymerize the epoxy group. Examples include aromatic iodonium salt, aromatic sulfonium salt, aromatic selenium salt and aromatic diazonium salt.

It is desired that the printing ink layer of the present invention contains fine transparent primary particles having an average particle diameter of from 0.01 to 1 μm from the standpoint of suppressing coagulation of the brilliant pigment, improving the dispersion property thereof, improving the transfer property of the ink, improving the plane orientation thereof and improving the brilliancy. The effect for enhancing the orientation of the brilliant pigment can be accomplished by being blended with the pigment described above but can also be accomplished by being blended with fine transparent particles having a predetermined average diameter without changing the color tone of the printed ink layer.

The fine transparent particles may be formed of a resin or an inorganic compound such as amorphous silica.

In the former case, the fine particles have a spherical shape of a diameter of from 0.01 to 1 μm prepared by the emulsification-polymerization method or by the emulsification-polymerization with a non-emulsifying agent, and are prepared by the emulsification -polymerization of a monomer component that will be described later in an aqueous medium so as to assume the particle diameter in a range of from 0.01 to 1 μm.

The monomer is usually a radically polymerizable monomer which is oleophilic, such as vinyl aromatic monomer, acrylic monomer, vinyl ether monomer, etc.

As the vinyl aromatic monomer, there can be exemplified styrene, α-chlorostyrene, o,m,p-chlorostyrene, p-ethylenestyrene and divinylbenzene.

As the acrylic monomer, there can be exemplified methyl acrylate, ethyl acrylate, butyl acrylate, 2-ethylhexyl acrylate, cyclohexyl acrylate, methyl methacrylate, ethyl methacrylate, butyl methacrylate, hexyl methacrylate, 2-hydroxyethyl acrylate, 3-hydroxypropyl acrylate, 4-hydroxybutyl acrylate, 2-hydroxyethyl methacrylate, ethylene glycol dimethacrylate and tetraethylene glycol dimethacrylate.

As the vinyl ether monomer, there can be exemplified vinyl, n-butyl ether, vinylphenyl ether and vinylcyclohexyl ether.

As the diolefin monomer, there can be exemplified butadiene, isoprene and chloroprene.

As the monoolefin monomer, there can be exemplified ethylene, propylene, isobutylene-1, butene-1, pentene-1, and 4-methylpentene-1.

The monomer is a nonpolar monomer which, as required, can be used being copolymerized with a cationic monomer or an anionic monomer for adjusting the dispersion property of fine particles, or can be used being copolymerized with a crosslinking monomer for preventing the dissolution.

As the cationic monomer, there can be exemplified a monomer containing a cationic group like a basic nitrogen atom, such as dimethylaminoacrylate, dimethylaminoethylacrylate, diethylaminopropylacrylate, N-aminoethylaminopropylacrylate, dimethylaminomethacrylate, dimethylaminoethylmethacrylate, diethylaminopropylmethacrylate, N-aminoethylaminopropylmethacrylate, vinylpyridine, 2-viylimidazole, 2-hydroxy-3-acryloxypropylmethylammonium chloride, and monomer containing primary, secondary or tertiary amino group or a quaternary ammonium group like acrylonitrile.

As the anionic monomer, there can be exemplified a monomer having an anionic group like sulfonic acid, carboxylic acid, phosphonic acid or a salt thereof, preferably, a monomer having sulfonic acid or a group of a salt thereof, such as styrenesulfonic acid, vinylsulfonic acid, acrylsulfonic acid, acrylamidemethylpropanesulfonic acid, acryleulfonic acid, methacrylsulfonic acid, acryl-2-ethylsulfonic acid, methacryl-2-ethylsulfonic acid, and sodium, potassium and calcium salts thereof.

As the crosslinking monomer, there can be exemplified divinylbenzene (DVB), diallyl phthalate (DAP) and triallyl isocyanulate.

As the inorganic fine transparent particles, there can be used those of amorphous silica and, particularly, amorphous silica obtained by the dry method (pyrolysis of silicon tetrachloride) or amorphous silica obtained by the wet method, satisfying the above-mentioned particle diameters.

It is desired that the printing ink of the present invention contains the brilliant pigment at a concentration of from 5 to 40% by weight and, particularly, from 7 to 35% by weight. That is, when the concentration of the brilliant pigment is not larger than 5% by weight, the brilliancy becomes insufficient as compared with when the concentration lies in the range contemplated by the present invention (Comparative Example 3). When the concentration of the brilliant pigment exceeds 40% by weight, on the other hand, the transfer property of the ink is markedly deteriorated as compared with when the concentration lies within the range of the present invention and it becomes difficult to obtain favorably printed matter maintaining high brilliancy (Comparative Example 4).

It is desired that the fine transparent particles are contained at a concentration of from 0.5 to 20% by weight and, particularly, from 1 to 10% by weight. When the concentration of the fine transparent particles is lower than 0.5% by weight, effects such as dispersion and scattering property of the brilliant pigment particles and transfer property of the ink are not exhibited to a degree to make a distinction over when the fine transparent particles are not added (Comparative Example 8). When the concentration of the fine transparent particles exceeds 20% by weight, on the other hand, there is no improvement in the dispersion and scattering property of the brilliant pigment particles or in the transfer property of the ink as compared with when the concentration lies in the range of the present invention, and brilliant feeling rather decreases (Comparative Example 9).

It is desired that the printing ink has an apparent viscosity $\eta_{100}$ at 35°C and at a shearing rate 100 $sec^{-1}$ of not larger than 2 Pa · sec and, particularly, in a range of from 0.05 to 1 Pa·sec. That is, when $\eta_{100}$ exceeds 2 Pa·sec, the ink tends to stay on the printing plate as compared with when $\eta_{100}$ lies in the range of the present invention, and the ink as a whole is thickly printed offering poor reproduceability (Comparative Example 5).

[To-Be-Printed Material]

The printing ink of the present invention can be applied to various to-be-printed materials and, particularly, to metal cans, plastic cans, metal caps, plastic caps, glass bottles, plastic bottles, plastic cups, plastic tubular containers, various pouches, inmolded labels for bottles, etc.

The present invention can be advantageously applied to any known metal cans such as two-piece cans and three-piece cans.

Among these metal cans, the two-piece cans (seamless cans) formed by draw-/deep-draw-forming a metal or a coated metal, formed by draw-/ironing-forming the metal or the coated metal, or formed by draw-/bend-elongation/ironing-forming the metal or the coated metal, have their outer surfaces printed after the formation. The present invention is effective in imparting brilliancy to the print on the outer surfaces of the cans.

The two-piece cans to be printed by the present invention are produced by subjecting a metal blank or a metal blank with an organic coating to the draw-/redraw-forming, draw-/ironing-forming, or draw-/bend-elongation/ironing-forming. The metal blank with the organic coating may be formed into a cup, or the metal cup may be provided with an organic coating. From the standpoint of easy and simple production, however, it is desired that the metal blank with the organic coating is formed into a cup.

Referring to Fig. 2 illustrating, in cross section, the structure of a two-piece can, the cup 10 includes a metallic base member 11, an inner organic film 12 formed on the inner side surface thereof, and an outer organic film 13 formed on the other surface of the base member.

Referring to Fig. 3 illustrating another structure in cross section, the cup has an inner organic coating 12a applied onto the metallic base member 11 thereof and no particular organic film is formed on the outer surface of the metallic base member 11. As pointed out earlier, on this outer surface will be applied the coating and printing such as white coating that will be described below in detail.

In the present invention, various surface-treated steel plates and light metal plates such as of aluminum are used as metal plates.

As the surface-treated steel plate, there can be used a cold-rolled steel plate that is annealed and is subjected to the secondary cold rolling, followed by one or two or more kinds of surface treatments such as tin plating, nickel plating, electrolytic chromate treatment and chromate treatment. A preferred example of the surface-treated steel plate is an electrolytic chromate-treated steel plate and, particularly, the one having a metal chromium layer in an amount of 10 to 200 $mg/m^2$ and a chromium oxide layer in an amount of 1 to 50 $mg/m^2$ (reckoned as metal chromium) exhibiting excellent film adhesion and corrosion resistance in combination.

Another example of the surface-treated steel plate is a hard tin plate having a tin plating in an amount of from 0.5 to 11.2 $g/m^2$. It is desired that the tin plate has been treated with chromic acid or with chromic acid/phosphoric acid such that the amount of chromium is from 1 to 30 $mg/m^2$ reckoned as metal chromium. A further example is an aluminum-coated steel plate plated with aluminum or onto which aluminum is press-adhered.

Light metal plates will be a so-called pure aluminum plate and an aluminum alloy plate. The aluminum alloy plate having excellent corrosion resistance and workability has a composition of 0.2 to 1.5% by weight of manganese, 0.8 to 5% by weight of magnesium, 0.25 to 0.3% by weight of zinc, 0.15 to 0.25% by weight of copper, and the remainder of aluminum. It is desired that the light metal plate, too, is treated with chromic acid or with chromic acid/phosphoric acid so that the amount of chromium is 20 to 300 $mg/m^2$ reckoned as metal chromium.

The thickness of the metal plate, i.e., the thickness (tB) of the bottom of the can, varies depending upon the kind of the metal, use or size of the container, but, generally, is from 0.10 to 0.5 mm, and is from 0.10 to 0.3 mm in the case of the surface-treated steel plate, or is from 0.15 to 0.40 mm in the case of a light metal plate.

The organic coating provided as desired on the metallic base member may be formed of a thermoplastic resin, a thermosetting resin, or a composition thereof. Generally, however, it is desired that the organic coating is formed of a thermoplastic resin. When the metallic base member is an aluminum base member, no resin coating may be formed on the outer surface as shown in Fig. 3.

As the thermoplastic resin applied onto the metal plate, there can be preferably used crystalline thermoplastic resins such as olefin resin films like that of polyethylene, polypropylene, ethylene/propylene copolymer, ethylene/vinyl acetate copolymer, ethylene/acryl ester copolymer and ionomer; polyesters like polyethylene terephthalate, polybutylene terephthalate, and ethylene terephthalate/isophthalate copolymer; polyamides like nylon 6, nylon 6,6, nylon 11, and nylon 12; polyvinyl chloride; and polyvinylidene chloride.

The coated layer of the thermoplastic resin may contain an inorganic filler (pigment) to conceal the metal plate and to assist the transmission of the blank holding force to the metal plate at the time of draw-/redraw-forming. Further, the film may be blended with a known blending agent for films, such as antiblocking agent like amorphous silica, various antistatic agents, lubricating agent, antioxidant and ultraviolet ray-absorbing agent.

As the inorganic filler, there can be exemplified inorganic white pigments such as rutile type or anatase type titanium dioxide, zinc flower and Cloth White; white bodies such as baryte, precipitated baryte sulfate, calcium carbonate, gypsum, precipitated silica, aerosil, talc, fired or unfired clay, barium carbonate, alumina white, synthetic or natural mica, synthetic calcium silicate and magnesium carbonate; black pigments such as carbon black and magnetite; red pigments, such as red iron oxide, etc.; yellow pigments such as sienna; and blue pigments such as prussian blue and cobalt blue. These inorganic fillers can be blended in an amount of 10 to 500% by weight and, particularly, 10 to 300% by weight per the resin.

The metal plate can be coated with the thermoplastic resin by a heat-melting method, a dry lamination or an extrusion-coating method. When the adhesion (heat-melting property) is poor between the coated resin and the metal plate, there can be interposed, for example, urethane adhesive, epoxy adhesive, acid-modified olefin resin adhesive, copolyamide adhesive or polyester adhesive.

It is desired that the thermoplastic resin has a thickness of generally from 3 to 50 μm and, particularly, from 5 to 40 μm. When the film is to be heat-melt-adhered, the film may have not been drawn or may have been drawn.

As a preferred film, there can be exemplified the one obtained by molding a polyester comprising chiefly an ethylene terephthalate unit or a butylene terephthalate unit into a film by the T-die method or the inflation film-forming method, biaxially drawing the film at a drawing temperature successively or simultaneously, and thermally setting the film after drawn.

The polyethylene terephthalate itself can be used as the starting polyester. From the standpoint of shock resistance and workability, however, it is desired to lower a maximum degree of crystallinity that can be reached by the film. For this purpose, it is desired to introduce a copolymerized ester unit other the ethylene terephthalate into the polyester. It is particularly desired to use a biaxially drawn film of a copolymerized polyester having a melting point of from 210 to 252°C comprising chiefly the ethylene terephthalate unit or the butylene terephthalate unit and containing other ester units in small amounts. The homopolyethylene terephthalate has a melting point of, generally, 255 to 265°C.

In the copolymerized polyester, in general, it is desired that not less than 70 mol % and, particularly, not less than 75 mol % of the dibasic acid component is a terephthalic acid component, not less than 70 mol % and, particularly, not less than 75 mol % of the diol component is an ethylene glycol or a butylene glycol, and from 1 to 30 mol % and, particularly, from 5 to 25 mol % of the dibasic acid component is a dibasic acid other than the terephthalic acid.

As the dibasic acid other than the terephthalic acid, there can be exemplified an aromatic dicarboxylic acid such as isophthalic acid, phthalic acid, or naphthalene dicarboxylic acid; an alicyclic dicarboxylic acid such as cyclohexane dicarboxylic acid; and an aliphatic dicarboxylic acid such as succinic acid, adipic acid, sebacic acid or dodecanedioic acid, which can be used in one kind or in a combination of two or more kinds. As the diol component other than the ethylene glycol or the butylene glycol, there can be exemplified one or two or more kinds of ethylene oxide adducts of propylene glycol, diethylene glycol, 1,6-hexylene glycol, cyclohexane dimethanol or bisphenol A. It is desired that the combination of these comonomers is to place the melting point of the copolymerized polyester in the above-mentioned range, as a matter of course.

The polyester or the copolyester that is used should have a molecular weight large enough for forming a film. For this purpose, it is desired that their intrinsic viscosities (I.V.) lie over a range of from 0.55 to 1.9 dl/g and, particularly, from 0.65 to 1.4 dl/g.

It is desired that the film is drawn, generally, at a temperature of from 80 to 110°C, so that the area-drawing ratio is from 2.5 to 16.0 and, particularly, from 4.0 to 14.0. It is desired that the film is thermally set at 130 to 240°C and, particularly, at 150 to 230°C.

In laminating the layers, the films to be laminated are allowed to pass through the crystallization temperature zone over a period of time which is as short as possible, preferably, over a period of not longer than 10 seconds and, particularly, not longer than 5 seconds in order to prevent excess degree of crystallization. In laminating the layers, therefore, the metal blank only is heated and after the films are laminated, the laminate is forcibly cooled. The cooling is effected by the direct contact with the cooling air or the cooling water, or by the pressed contact with the cooling roller that is forcibly cooled. In laminating the layers, it should be understood that the film is heated near to its melting point and is quickly cooled after it is laminated to relax the degree of crystal orientation.

When an adhesive primer is used, it is generally desired to treat the film surfaces with corona discharge to enhance the adhesiveness to the adhesive primer. It is desired that the degree of treatment with corona discharge is such that the wet tension is not smaller than 44 dynes/cm.

It is further possible to treat the surface of the film with a plasma or with a flame in a known manner to improve the adhesiveness, or to have the surface of the film coated with an urethane resin or a modified polyester resin to improve adhesiveness.

The adhesive primer that is provided as desired between the polyester film and the metal blank exhibits excellent adhesiveness to both the metal blank and the film. A representative example of the primer coating material having excellent adhesiveness and corrosion resistance is a phenolepoxy coating material comprising a bisphenol type epoxy resin and a resol type phenolaldehyde resin derived from various phenols and formaldehydes and, particularly, a coating material containing a phenol resin and an epoxy resin at a weight ratio of from 50:50 to 5:95 and, particularly, from 40: 60 to 10:90.

The adhesive primer layer is generally formed maintaining a thickness of 0.3 to 5 μm. The adhesive primer layer may be formed on the metal blank in advance or may be formed on the polyester film in advance.

The polyester layer which forms a coating for the metal may be formed by the so-called extrusion coating instead of being applied in the form of a biaxially drawn film. According to this extrusion coating method, a web of a molten resin extruded from a die is supplied onto the heated metallic base member, press-adhered thereon by a laminate roll and is quickly cooled.

As the thermosetting resin coating material used for coating, there can be used, for example, phenolformaldehyde resin, furanformaldehyde resin, xyleneformaldehyde resin, ketoneformaldehyde resin, ureaformaldehyde resin, melamineformaldehyde resin, alkyd resin, unsaturated polyester resin, epoxy resin, bismaleimide resin, triallyloyanulate

resin, thermosetting acrylic resin, silicone resin, oil resin, or a composition of the above thermosetting resin and a thermoplastic resin coating material such as vinyl chloride/vinyl acetate copolymer, vinyl chloride/maleic acid copolymer, vinyl chloride/maleic acid/vinyl acetate copolymer, acrylic polymer, or saturated polyester resin.

Among the above-mentioned thermosetting resin coating materials, it is desired to use the (a) epoxy resin and (b) the curing resin for the epoxy resin in combination.

Among these curing resins, it is desired to use a phenolformaldehyde resin and, particularly, a phenolaldehyde resin component containing a polycyclic and polyhydric phenol from the standpoint of adhesion to the film, barrier property to the corrosive components and resistance against the working.

A two-piece can (seamless can) is formed by known means, such as draw-/redraw-forming, draw-/redraw-/ironing-forming, draw-/bend-elongation/redraw-forming, or draw-/bend-elongation/ironing-forming.

According to, for example, deep draw-forming (draw-/redraw-forming), a pre-drawn cup formed from a coated metal plate is held by an annular holding member inserted in the cup and a redrawing die positioned thereunder. A redrawing punch is arranged in concentric with the holding member and the redrawing die in a manner that it can be inserted in, or pulled out from, the holding member. The redrawing punch and the redrawing die are moved relative to each other and in mesh with each other.

Accordingly, the side wall of the pre-drawn cup is bent inward from the outer peripheral surface of the annular holding member through the curved corner portion thereof, passes through a portion defined by an annular bottom surface of the annular holder member and the upper surface of the redrawing die, bent nearly vertically in the axial direction by the working corner portion of the redrawing die, thereby to form a deep-drawn cup of a diameter smaller than the pre-drawn cup.

Further, the radius (Rd) of curvature of the working corner portion of the redrawing die is selected to be from 1 to 2.9 times and, particularly, from 1.5 to 2.9 times of the thickness (tB) of the metal plank, in order to effectively decrease the thickness of the side wall portion by bend-elongation. Not only this, change in the thickness is eliminated in the lower and upper portions of the side walls, and the thickness is uniformly decreased over the whole areas. In general, the thickness of the side wall of the can barrel to the thickness (tB) of the blank (change in the thickness) can be selected to be 5 to 45% (-5 to -45%) and, particularly, 5 to 40% (-5 to -40%).

In the case of the deep-drawn can, it is desired that the drawing ratio RD defined by the following formula (1),

$$RD = D/d \qquad \text{--- (1)}$$

wherein D is a diameter of a sheared laminated
member, and d is a diameter of the punch, is in a range of from 1.1 to 3.0 in a first step, and is in a range of from 1.5 to 5.0 as a total.

It is further allowable to arrange the die after the redrawing or after the bend-elongation/redrawing and to decrease the thickness of the side wall by ironing, so that the ironing ratio RI defined by the following formula,

$$RI = (tB - tW)/tB \times 100 \qquad \text{--- (2)}$$

wherein tB is a thickness of the blank, and tW is a
thickness of the side wall,
is from 5 to 70% and, particularly, from 10 to 60%.

It is desired to conduct the draw-forming by applying various lubricants such as fluidized paraffin, synthetic paraffin, edible oil, hydrogenated edible oil, palm oil, various natural waxes or polyethylene wax onto the coated metal plate or onto the cup. The amount of applying the lubricant varies depending upon the kind thereof but is generally in a range of from 0.1 to 10 mg/$dm^2$ and, particularly, in a range of from 0.2 to 5 mg/$dm^2$. The lubricant is applied in a molten state by being sprayed onto the surfaces.

The cup is advantageously draw-formed by setting the temperature of the resin-coated draw-formed cup to be higher than a glass transition point (Tg) of the coated resin and, particularly, to be not higher than the heat crystallization temperature thereof, so that the resin coated layer plastically flows easily.

The formed metallic cup of which the inner surface is coated is subjected to the so-called trimming to cut selvage portions of the cup opening, and is then put to the step of printing. Prior to the trimming, the formed cup may be heated at a temperature higher than the glass transition point (Tg) of the coated resin but is lower than the melting point thereof to relax the distortion of the coated resin. This operation is effective in enhancing the adhesion between the coating and the metal particularly when the thermoplastic resin is used.

[Printing]

According to the present invention, use is made of a printing ink containing from 5 to 40% by weight of at least one brilliant pigment selected from the group consisting of aluminum flakes and a pearl pigment coated with fine particles and having an average particle diameter of from 5 to 25 $\mu$m, the printing ink having an apparent viscosity $\eta_{100}$ of not larger than 2 Pa·sec at 35°C and at a shearing rate of 100 $sec^{-1}$, use is made of a resin letterpress having a JISA hardness of not larger than 90 degrees, and the printing ink on the printing plate is transferred onto a blanket, and the printing ink on the blanket is transferred onto a to-be-printed material thereby to effect the printing on the to-be-printed material.

It effecting the printing, it is desired that the printed ink layer has an average film thickness of from 0.2 to 10 $\mu$m, and the area ratio (S) occupied by the brilliant pigment particles in the printed ink layer is not smaller than 10% and, particularly, not smaller than 20%.

The thickness of the printed ink layer can be easily adjusted by known means such as adjusting the amount of transfer of the ink onto the printing plate.

In order to enhance the area ratio (S) occupied by the brilliant pigment particles, further, the ink must be uniformly transferred onto the printing plate without dispersion, and the brilliant pigment particles must be oriented in the direction of a plane (area increases in the direction of the plane).

In order to effectively transfer the ink onto the printing plate, there can be effectively used an engraved roller (hatched type engraved roller) having grooves engraved in the surface or an engraved roller (lattice type engraved roller) having lattice-like fine grooves engraved in the surface in order to draw up the ink from the ink pan. By using these engraved rollers, the brilliant pigment particles are not pulverized despite the plate cylinder and the draw-up roller come into press-contact with each other, offering a very favorable action in that the ink is smoothly transferred from the draw-up roller onto the plate cylinder and the brilliant pigment particles tend to be oriented in the direction of the plane.

In the case of the hatched type engraved roller, linear grooves are formed in parallel maintaining a predetermined gap at an angle of 25 to smaller than 90 degrees and, particularly, 45 to 85 degrees with respect to the roller axis. The depth of the grooves may differ depending upon the viscosity of the printing ink but is, usually, from 10 to 60 $\mu$m and, particularly, from 10 to 40 $\mu$m. Further, the pitch among the grooves is, usually, 80 to 300 grooves per inch and, particularly, 120 to 275 grooves per inch, and the width of the grooves is from 80 to 200 $\mu$m though it may vary depending upon the number of the grooves.

The lattice type engraved roller has many fine apertures (cells) of a trapezoidal shape in cross section formed in the lattice-like portions constituted by groups of parallel lines maintaining a predetermined gap and intersecting one another in two directions. It is desired that the apertures have a depth of, generally, 10 to 40 $\mu$m and, particularly, 10 to 30 $\mu$m though it may vary depending upon the viscosity of the printing ink. It is further desired that the lattice has a pitch of, generally, 80 to 300 lines per inch and, particularly, 120 to 250 lines per inch. The groups of parallel lines intersecting in the two directions define angles with respect to the roller axis, one angle being from 25 to 75 degrees and, particularly, from 30 to 60 degrees and the other angle being from 335 to 285 degrees and, particularly, from 330 to 300 degrees. It is desired that the groups of parallel lines in the two directions are symmetrical with respect to the roller axis. Though there is no particular limitation, the engraved roller is usually made of a steel.

It is desired that the lattice type engraved roller has a cell capacity of, generally, 6 to 18 $cc/m^2$.

A suitable engraved roller is available in the trade name of ANILOCKS ROLLER.

Referring to Fig. 4 which schematically illustrates the structure of a printer used in the present invention, the brilliant pigment-containing ink is contained in an ink pan 21, and an engraved draw-up roller 23 is provided to rotate in contact with the ink. A doctor blade 24 is disposed surrounding the engraved draw-up roller 23 to control the thickness of the ink layer and, besides, a plate cylinder 25 is provided to be in contact with the engraved draw-up roller 23. Further, a blanket cylinder 26 is provided in contact with the plate cylinder 25 to receive the ink layer from the plate cylinder 25 and to transfer it onto the outer surface of the can body.

The brilliant pigment-containing ink in the pan 21 is drawn up being held by the surface of the engraved draw-up roller 23, adjusted for its thickness upon coming into contact with the doctor blade 24, comes in contact with the plate cylinder 25, and is applied onto the picture-bearing portion of the plate cylinder 25. The ink layer on the plate cylinder is then transferred onto the surface of the blanket cylinder 26, and the ink layer on the blanket cylinder 26 is transferred onto the can body (not shown) which is in contact with the blanket cylinder so that an image is printed thereon.

A resin letterpress is used as a printing plate of the plate cylinder 25. The hardness of the resin letterpress plays a particularly important roll, and there is favorably used a resin letterpress having a hardness of not larger than 90 degrees as found by using a JISA hardness meter. When the hardness of the printing plate is not smaller than 90 degrees, the brilliant pigment having large particle sizes deposits on the printing plate causing the transfer to become poor (Comparative Example 10). As a printing plate having a low hardness, there can be used a resin plate for flexo printing.

In the printer shown in Fig. 4, the ink layer drawn up by the engraved draw-up roller 23 is fed to the printing plate of the plate cylinder 25. However, a rubber roller may be interposed between the engraved draw-up roller 23 and

the plate cylinder 25, so that the ink layer that is drawn up is fed onto the printing plate via the rubber roller.

In the printer shown in Fig. 4, further, the ink is drawn up by the engraved draw-up roller 23 from the ink pan 21. It is, however, also allowable to use an ink chamber 27 that has been known in the flexo printing instead of using the ink pan 21. For high-speed printing, in particular, the ink chamber 27 is preferred since it permits the ink to be scattered little. Fig. 5 illustrates a constitution thereof.

In the printing method according to the present invention, it is desired to provide a clear coating on the printed ink layer. That is, in the present invention, the ink layer is printed on the outer surface of the to-be-printed member by the offset method or the like method, and it becomes necessary to protect the outer surface of the printed ink layer with a clear coating.

The clear coating not only mechanically protects the printed ink layer from abrasion or peeling but also imparts an auxiliary effect such as improving brilliancy by preventing irregular reflection from the outer surface of the printed ink layer.

As the clear coating to be applied onto the printed ink layer, there is used what is called finishing varnish which is generally employed in the field of printing the cans. As the clear coating, there is used a resin described in connection with the printing ink and having excellent transparency without adding brilliant pigment or coloring agent. The resin may be either of the thermally curing type or the ultraviolet-ray curing type.

There is no particular limitation on the thickness of the clear coating provided it is capable of protecting the printed ink layer to a sufficient degree. Generally, however, it is desired that the thickness is 3 to 10 μm and, particularly, 4 to 6 μm.

The clear coating is formed by using an applicator roller instead of using the plate cylinder 25 in the printer shown in Fig. 4, and by bringing the applicator roller into contact with the outer surface of the printed can body in the same manner as described above.

The printed ink layer and the clear coating may be formed in a so-called wet-on-wet relationship or in a so-called wet-on-dry relationship by which the clear coating is formed after the printed ink layer is cured.

The printed ink layer and the clear coating can be cured by heating at a temperature of 180 to 220°C. In the case of curing by ultraviolet rays, on the other hand, there is used an ultraviolet ray inclusive of that of a near ultraviolet region having a wavelength of, generally, 200 to 430 nm and, particularly 240 to 420 nm. As a source of ultraviolet ray, there can be used a halide lamp, a high-pressure mercury lamp or a low-pressure mercury lamp. The coating layer has a small thickness offering an advantage in that a considerably small amount of energy is needed for the curing. Generally, energy of 500 to 5000 joules/$m^2$ suffices for the need.

[Printed Packaging Material]

The printed packaging material of the present invention has a printed ink layer containing a brilliant pigment selected from the group consisting of aluminum flakes and a pearl pigment coated with fine particles applied onto the outer surface of a packaging material, and a clear coating formed on the printed ink layer.

The aluminum flake pigment in the printed ink layer produces metallic reflected light for the incident light, i.e., reflects light by the front surfaces thereof, and the pearl luster flake pigment gives a special interference color light by the multiple reflection for the incident light. These pigments have a common nature in regard to imparting brilliant appearance to the printed ink layer.

In the printed packaging material of the present invention, it is an essential requirement that the printed ink layer is provided with the clear coating. That is, unlike the laminate of films in which the ink layer is printed on the back surface, the ink layer according to the present invention is applied onto the outer surface of the packaging member by offset. Accordingly, it is necessary to protect the outer surface of the printed ink layer with the clear coating.

The clear coating not only mechanically protects the printed ink layer from abrasion or peeling but also imparts an auxiliary effect such as improving brilliancy by preventing irregular reflection from the outer surface of the printed ink layer.

The printed packaging material constituted according to the present invention has a feature in the combination of the following three requirements:

the printed ink layer has an average film thickness of from 0.2 to 10 μm, particularly, from 0.3 to 3 μm and, most particularly, from 0.5 to 2 μm;

the average particle diameter (D) calculated from the areas of the brilliant pigment particles present in the printed ink layer is from 3 to 20 μm and, particularly, from 5 to 16 μm; and

the area ratio (S) occupied by the brilliant pigment particles is not smaller than 10% and, particularly, is not smaller than 20%.

Upon satisfying these requirements, there is obtained brilliancy which is bright, deep and is well balanced.

First, to effectively develop brilliancy, the brilliant pigment particles must exist in the printed ink layer in a small and narrow range maintaining a predetermined thickness.

When the average thickness of the printed ink layer becomes smaller than the above range, the transfer of the ink layer becomes irregular to a conspicuous degree and the brilliancy is not obtained as intended (Comparative Example 11). When the thickness of the film exceeds the above range, on the other hand, it becomes difficult to uniformly apply the thermosetting clear coating, or the ink layer is not sufficiently adhered deteriorating the appearance, and brilliancy is not satisfactory (Comparative Example 12).

According to the present invention, the printed ink layer has a relatively small thickness lying in the above-mentioned range. Therefore, the brilliant pigment particles in the ink layer are oriented in the direction of a plane or in a direction close to the plane, and excellent brilliancy is imparted to the printed ink layer.

From the standpoint of brilliancy, furthermore, it is important that the average particle diameter (D) of the brilliant pigment particles in the printed ink layer lies within the above-mentioned range. In this specification, the average particle diameter (D) of the particles is measured from the areas of the particles in the printed ink layer and, concretely, is measured by a method described in Example appearing later, and is different from the median diameter (D50) of the powder, which is usually used.

When the average particle diameter (D) becomes smaller than the above range, the printed ink layer as a whole tends to become dark and brilliancy is not enough (Comparative Example 1). When the average particle diameter (D) exceeds the above range, on the other hand, a difference in the reflection becomes too great between a portion where the brilliant pigment exists and a portion where no brilliant pigment exists, and brilliancy is not obtained maintaining good balance (Comparative Example 2).

In the present invention, further, it is still important concerning brilliancy that the area ratio (S) occupied by the brilliant pigment particles lies within the above-mentioned range. The area ratio (S) is a ratio of the area occupied by the brilliant pigment particles to the area of the printed ink layer, and is concretely found by a method described in Example appearing later.

When the area ratio (S) becomes smaller than the above range, the effect of concealing by the brilliant pigment is not sufficient and brilliancy is not sufficient, either (Comparative Example 3).

In the present invention, the average particle diameter (D) of the brilliant pigment particles is closely related to the microscopic intensity of reflection (optical intensity of brilliancy) with a particle as a reference, whereas the are a ratio (S) is closely related to the macroscopic distribution of reflection of the printed ink layer as a whole. With these values lying in the above-mentioned ranges, there is exhibited brilliancy which is bright, deep and is well balanced.

As for a combination thereof, it is desired that a product ($D^2$ x S) of a square power of the average particle diameter (D) and the area ratio (S) is not smaller than 300 and, particularly, not smaller than 500 from the standpoint of brilliancy.

When the product is smaller than the above range, the brilliancy tends to drop compared with that of when the product lies within the above range (Comparative Example 13).

Here, the product ($D^2$ x S) of the square power of the average particle diameter (D) and the area ratio (S) according to the invention is a quantity of two digits of significant figures for convenience.

[Examples]

The invention will now be described in further detail by way of Examples.

[Average Particle Diameter of Brilliant Pigment in the Ink]

The printing ink in which the brilliant pigment has been dispersed was diluted with a suitable solvent. By using this diluted solvent, the average particle diameter was measured on the volume basis by the laser scattering method. (laser diffraction particle diameter distribution measuring apparatus SALD-3000 (Shimazu Seisakusho)

[Measurement of Apparent Viscosity of the Ink]

A rheometer for liquid, ARES-100FRT-BATH-STD (rheometric Scientific F.E. Co.), was provided with a jig of the cone plate type, and a steady-flow viscosity of the ink was measured at 35°C to obtain an apparent viscosity $\eta_{100}$ at a shearing rate 100 sec.

[Measurement of Vaporization Rate of the Ink]

The ink was spread maintaining a thickness of 10 $\mu$m on one surface of an aluminum plate for can having a thickness of 0.3 mm, a length of 20 cm and a width of 5 cm and of which the weight has been measured in advance.

The plate was weighed immediately after it was spread with the ink, left to stand in a room air-conditioned at 22°C for one hour, and was weighed again. The plate was surrounded by a closure made of a corrugated card board having a height of 30 cm so that it was not affected by the wind while it was being left to stand. A reduction in the ink was found from the weights of the ink before and after the plate was left to stand. The reduction was calculated from 100 x (W1 - W2)/W1 wherein W1 is the weight of the ink of before the plate is left to stand and W2 is the weight of the ink of after the plate is left to stand.

[Printing]

Fig. 4 schematically illustrates a printer. The ink contained in the ink pan was picked up by the engraved roll which has been engraved like a lattice, and was transferred onto the resin letterpress. The picture on the resin letterpress was printed onto a to-be-printed material via the blanket.

As the engraved roll, there were used a roll having apertures of a depth of 30 μm of an inverted truncated pyramidal shape with a side of a square of the opening of the aperture of 180 μm and a side of a square of the bottom of the aperture of 110 μm in the lattice portion formed by groups of parallel lines of a pitch of 120 lines per inch intersecting at right angles with each other at angles of 45 degrees and 135 degrees with respect to the roll axis (engraved roll having a cell volume of 18 cc), a roll having apertures of a depth of 20 μm of an inverted truncated pyramidal shape with a side of a square of the opening of the aperture of 170 μm and a side of a square of the bottom of the aperture of 110 μm (engraved roll having a cell volume of 12 cc), a roll having apertures of a depth of 15 μm of an inverted truncated pyramidal shape with a side of a square of the opening of the aperture of 160 μm and a side of a square of the bottom of the aperture of 110 μm (engraved roll having a cell volume of 8 cc), a roll having apertures of an inverted truncated pyramidal shape in cross section having a depth of 160 μm formed in a lattice portion having groups of parallel lines maintaining a pitch of 65 lines per inch (engraved roll having a cell volume of 69 cc), a roll having apertures of an inverted truncated pyramidal shape in cross section having a depth of 120 μm formed in a lattice portion having groups of parallel lines maintaining a pitch of 85 lines per inch (engraved roll having a cell volume of 58 cc), a roll having apertures of an inverted truncated pyramidal shape in cross section having a depth of 14 μm formed in a lattice portion having groups of parallel lines maintaining a pitch of 300 lines per inch (engraved roll having a cell volume of 5 cc), and a roll having apertures of an inverted truncated pyramidal shape in cross section having a depth of 8 μm formed in a lattice portion having groups of parallel lines maintaining a pitch of 300 lines per inch (engraved roll having a cell volume of 3 cc).

The blanket was an air blanket for metal printing having a cushion layer.

As the printing plate, there were used a resin letterpress (Silel EXL: Du Pont Co.) for flexo printing having a hardness of 70 degrees as measured by a method that will be described later, a resin letterpress (Silel NOW: Du Pont Co.) for flexo printing having a hardness of 78 degrees, a resin letterpress (B83S: Tokyo Oka Kogyo Co.) having a hardness of 90 degrees, and a resin letterpress (WF95DII: Toray Co.) having a hardness of 97 degrees.

[Measurement of Weight of the Transferred Ink]

The weight of the ink transferred per 100 $cm^2$ of the printed picture was found in compliance with 100 x (W3 - W4)/A from the weight W3 [mg] of the to-be-printed material immediately after the printing but before the curing, weight W4 [mg] of the to-be-printed material before being printed and the area A $cm^2$ of the printed picture.

[Measurement of the Area Ratio (S) that is Covered]

The packaging material that was prepared was cut opened into a flat plate, and a portion of the brilliant coating was photographed on an enlarged scale by using a reflection type microscope. The photograph was subjected to the image processing to find the area ratio covered with the brilliant pigment portion. In order to enhance the reliability, plural photographs were measured to find an average value S.

[Measurement of Average Particle Diameter (D) of the Brilliant Pigment]

By using the photograph used for measuring the covered area ratio, the area A covered with the brilliant pigment in the visual field was measured and, then, the number n of the brilliant pigment particles in the visual field was measured.

By using A and n, the particle diameter was calculated by the area method relying on the following formula (3),

$$D = (A/n)^{1/2} \qquad --- (3)$$

In order to obtain high reliability in the average particle diameter, an average value measured from plural photographs was used being denoted by D.

The average particle diameter (D) of the brilliant pigment in the coated layer found by the area method is the one calculated based on the area of the brilliant pigment that is seen when the coated layer is viewed from the upper direction. When the particles are poorly oriented in the direction of plane or are overlapped, therefore, the value D differs conspicuously even when there is contained the brilliant pigment of the same size.

That is, when the pigment is poorly oriented and is coagulated, D becomes a quantity which is closely related to a degree by which the brilliant pigment produces brilliant feeling in the coated layer compared with when the pigment is favorably oriented and is scattered.

[Measurement of Average Film Thickness of the Ink Film after Cured]

By using a contact-type surface coarseness meter, the printed can or the printed plate after cured was measured for its ruggedness on the picture-bearing portion and on the portion bearing no picture,and the average film thickness was calculated from the values thereof.

[Measurement of the Hardness of the Printing Plate]

The printing plate was placed on a flat test plate and the hardness was measured by using a jig for measuring the JISA hardness. The reading of the hardness meter at this moment was regarded to be a JISA hardness.

[Preparation of Thin Seamless Can]

A biaxially drawn polyethylene terephthalate/isophthalate copolymer film was heat-adhered maintaining a thickness of 20 μm onto the side that becomes the inner surface of a can of a tin-free steel plate which was a blank having a thickness of 0.18 mm and a tempering degree of DR-9 (surfaces were treated with a metal chrome in an amount of 120 $mg/m^2$ and with a chromium oxide in an amount of 15 mg/m2), and a biaxially drawn polyethylene terephthalate/ isophthalate copolymer film containing 20% by weight of titanium oxide was also heat-adhered simultaneously maintaining a thickness of 15 μm onto the side that becomes the outer surface thereof at a melting point of the film, followed immediately by cooling with water to obtain a metal plate having an organic coating. A glamour wax was uniformly applied onto the metal plate having the organic coating. The metal plate was then punched into a disk of a diameter of 160 mm, and a shallow-draw-formed cup was obtained according to the customary manner. The drawing ratio in this drawing step was 1.59.

Next, the primary and secondary redraw workings were effected relying upon the bend-elongation to obtain a deep-draw-formed cup having a decreased thickness. Described below are the redraw-forming conditions and properties of the deep-draw-formed cup obtained by the redraw-forming.

| | |
|---|---|
| Primary redrawing ratio | 1.23 |
| Secondary redrawing ratio | 1.24 |
| Radius of curvature of working corner of redrawing die | 0.30 mm |
| Radius of curvature of holding corner of redrawing die | 1.0 mm |
| Diameter of cup | 66 mm |
| Height of cup | 130 mm |
| Change in the thickness of side wall | -40% |

Thereafter, the doming was effected in a customary manner and, then, the deep-draw-formed cup was heat-treated at 215°C for one minute to remove distortion caused by working from the film and to volatilize the lubricant. Then, edges at the end of the opening were cut off to obtain a thin seamless can having a height of 123 mm coated with a resin.

[Example 1]

200 Parts by weight of a liquid polyester resin (NS2400: Asahi Denka Kogyo Co.) was introduced into a stainless steel cup followed by the addition of 115 parts by weight of a diethylene glycol butylether acetate with stirring. Next, 100 parts by weight of an amino resin (Cymel 235: Mitsui Cytech Co.) and 1.5 parts by weight of an acid catalyst (Catalyst 600: Mitsui Cytec Co.) were added thereto with stirring, followed by the addition of 95 parts by weight of an aluminum paste of the nonleafing type having an average particle diameter of 13 μm with stirring to disperse aluminum particles

to a sufficient degree and to obtain a brilliant ink. The content of the brilliant pigment in the brilliant ink was 13% by weight, $\eta_{100}$ at 35°C was 0.20 Pa · sec, and the reduction of weight when left to stand in an open atmosphere at 22°C was 6%.

By using a printer equipped with an engraved roll having a cell volume of 12 cc and a printing plate having a hardness of 70 degrees, the above prepared ink was printed onto a thin seamless can. The ink was favorably transferred and the print exhibited excellent brilliancy. The amount of the ink transferred was 24 mg/100 $cm^2$. The printed can was heat-treated at 205°C for 2 minutes to cure the ink. The area ratio (S) covered with the brilliant pigment at the brilliantly printed portion was 28%, the average particle diameter (D) was 8.0 μm, and $D^2$ x S was 1800. The average thickness of the ink film after drying was 1.2 μm. A finishing varnish was applied onto the printed can and was dried in a customary manner to obtain excellent appearance with good brilliancy.

[Example 2]

250 Parts by weight of a liquid polyester resin (NS2400: Asahi Denka Kogyo Co.) was introduced into a stainless steel cup followed by the addition of 150 parts by weight of a diethylene glycol butyl ether acetate with stirring. Next, 150 parts by weight of an amino resin (Cymel 235: Mitsui Cytech Co.) and 2.0 parts by weight of an acid catalyst (Catalyst 600: Mitsui Cytec Co.) were added thereto with stirring, followed by the addition of 70 parts by weight of an aluminum paste of the leafing type having an average particle diameter of 8 μm with stirring to disperse aluminum particles to a sufficient degree and to obtain a brilliant ink. The content of the brilliant pigment in the brilliant ink was 7% by weight, $\eta_{100}$ at 35°C was 0.19 Pa·sec, and the reduction of weight when left to stand in an open atmosphere at 22°C was 3%.

By using a printer equipped with an engraved roll having a cell volume of 12 cc and a printing plate having a hardness of 70 degrees, the above prepared ink was printed onto a thin seamless can. The ink was favorably transferred and the print exhibited excellent brilliancy. The amount of the ink transferred was 22 mg/100 $cm^2$. The printed can was heat-treated at 205°C for 2 minutes to cure the ink. The area ratio (S) covered with the brilliant pigment at the brilliantly printed portion was 39%, the average particle diameter (D) was 4.1 μm, and $D^2$ x S was 660. The average thickness of the ink film after drying was 1.2 μm. A finishing varnish was applied onto the printed can and was dried in a customary manner to obtain excellent appearance with good brilliancy.

[Example 3]

200 Parts by weight of a liquid polyester resin (NS2400: Asahi Denka Kogyo Co.) was introduced into a stainless steel cup followed by the addition of 115 parts by weight of a diethylene glycol butyl ether acetate with stirring. Next, 100 parts by weight of an amino resin (Cymel 235: Mitsui Cytech Co.) and 1.5 parts by weight of an acid catalyst (Catalyst 600: Mitsui Cytec Co.) were added thereto with stirring, followed by the addition of 110 parts by weight of mica coated with titanium oxide having an average particle diameter of 16 μm with stirring to disperse mica particles to a sufficient degree and to obtain a brilliant ink. The content of the brilliant pigment in the brilliant ink was 21% by weight, $\eta_{100}$ at 35°C was 0.24 Pa · sec, and the reduction of weight when left to stand in an open atmosphere at 22°C was 1%.

By using a printer equipped with an engraved roll having a cell volume of 12 cc and a printing plate having a hardness of 70 degrees, the above prepared ink was printed onto a thin seamless can. The ink was favorably transferred and the print exhibited excellent brilliancy. The amount of the ink transferred was 25 mg/100 $cm^2$. The printed can was heat-treated at 205°C for 2 minutes to cure the ink. The area ratio (S) covered with the brilliant pigment at the brilliantly printed portion was 44%, the average particle diameter (D) was 9.1 μm, and $D^2$ x S was 3600. The average thickness of the ink film after drying was 1.2 μm. A finishing varnish was applied onto the printed can and was dried in a customary manner to obtain excellent appearance with good brilliancy.

[Example 4]

189 Parts by weight of a liquid polyester resin (NS2400: Asahi Denka Kogyo Co.) was introduced into a stainless steel cup followed by the addition of 108 parts by weight of a diethylene glycol butyl ether acetate with stirring. Next, 94 parts by weight of an amino resin (Cymel 235: Mitsui Cytech Co.) and 2.5 parts by weight of an acid catalyst (Catalyst 600: Mitsui Cytec Co.) were added thereto with stirring, followed by the addition of 26 parts by weight of a silica powder (AEROSIL 0X50: Nihon Aerosil Co.) having an average particle diameter of 0.04 μm, and the mixture was vigorously stirred and dispersed by using a homogenizer (manufactured by Tokushu Kika Kogyo Co.) at a stirring speed of 1000 rpm for 10 minutes. Then, the resin solution containing fine transparent particles was kneaded by using a three-roll mill to disperse the silica powder to a sufficient degree. To 340 parts by weight of the resin solution containing fine transparent particles after treated by using the three-roll mill was added 80 parts by weight of an aluminum paste of the nonleafing type having an average particle diameter of 13 μm with stirring to disperse aluminum particles to a sufficient degree and to obtain a brilliant ink. The content of aluminum in the brilliant ink was 13% by weight, the content of the silica powder

was 5% by weight, $\eta_{100}$ at 35°C was 0.25 Pa · sec, and the reduction of weight when left to stand in an open atmosphere at 22°C was 6%.

By using a printer equipped with an engraved roll having a cell volume of 12 cc and a printing plate having a hardness of 70 degrees, the above prepared ink was printed onto a thin seamless can. The ink was favorably transferred and the print exhibited excellent brilliancy. The amount of the ink transferred was 33 mg/100 $cm^2$. The printed can was heat-treated at 205°C for 2 minutes to cure the ink. The area ratio (S) covered with the brilliant pigment at the brilliantly printed portion was 43%, the average particle diameter (D) was 8.4 μm, and $D^2$ x S was 3000. The average thickness of the ink film after drying was 1.6 μm. A finishing varnish was applied onto the printed can and was dried in a customary manner to obtain excellent appearance with good brilliancy.

[Example 5]

By using a printer equipped with an engraved roll having a cell volume of 8 cc and a printing plate having a hardness of 70 degrees, the ink of Example 4 was printed onto a thin seamless can. The amount of the ink transferred was 23 mg/100 $cm^2$. The printed can was heat-treated at 205°C for 2 minutes to cure the ink. The area ratio (S) covered with the brilliant pigment at the brilliantly printed portion was 33%, the average particle diameter (D) was 8.5 μm, and $D^2$ x S was 2400. The amount of the ink on the can was nearly the same as that of Example 1. However, addition of the fine transparent particles has improved the area ratio covered by the brilliant pigment and the orientation of the brilliant pigment compared with those of Example 1. The average thickness of the ink film after drying was 1.2 μm. A finishing varnish was applied onto the printed can and was dried in a customary manner to obtain excellent appearance with good brilliancy.

[Example 6]

A brilliant ink was prepared in the same manner as in Example 4 but using a silica powder (Seahoster KE-E30: Nihon Shokubai Co.) having an average particle diameter of 0.3 μm. The content of the brilliant pigment in the brilliant ink was 13% by weight, the content of the silica powder was 5% by weight, $\eta_{100}$ at 35°C was 0.23 Pa·sec, and the reduction of weight when left to stand in an open atmosphere at 22°C was 6%.

By using a printer equipped with an engraved roll having a cell volume of 8 cc and a printing plate having a hardness of 70 degrees, the above prepared ink was printed onto a thin seamless can. The ink was favorably transferred and the print exhibited excellent brilliancy. The amount of the ink transferred was 22 mg/100 $cm^2$. The printed can was heat-treated at 205°C for 2 minutes to cure the ink. The area ratio (S) covered with the brilliant pigment was 31% and the average particle diameter (D) was 8.4 μm. The transfer of ink, area ratio (S) covered with the brilliant pigment at the brilliantly printed portion and the average particle diameter (D) were nearly the same as those of Example 5. In this case, $D^2$ x S was 2200. The average thickness of the ink film after drying was 1.2 μm. A finishing varnish was applied onto the printed can and was dried in a customary manner to obtain excellent appearance with good brilliancy.

[Example 7]

A brilliant ink was prepared in the same manner as in Example 6 but using the silica powder in an amount of 130 parts by weight. The content of the brilliant pigment in the brilliant ink was 13% by weight, the content of the silica powder was 20% by weight, $\eta_{100}$ at 35°C was 0.53 Pa · sec, and the reduction of weight when left to stand in an open atmosphere at 22°C was 6%.

By using a printer equipped with an engraved roll having a cell volume of 8 cc and a printing plate having a hardness of 70 degrees, the above prepared ink was printed onto a thin seamless can. The ink was favorably transferred and the print exhibited excellent brilliancy. The amount of the ink transferred was 23 mg/100 $cm^2$. The printed can was heat-treated at 205°C for 2 minutes to cure the ink. The area ratio (S) covered with the brilliant pigment was 32% and the average particle diameter (D) was 8.4 μm. The transfer of ink, area ratio (S) covered with the brilliant pigment at the brilliantly printed portion and the average particle diameter (D) were nearly the same as those of Example 5. In this case, $D^2$ x S was 2300. The average thickness of the ink film after drying was 1.1 μm. A finishing varnish was applied onto the printed can and was dried in a customary manner to obtain excellent appearance with good brilliancy.

[Example 8]

A brilliant ink was prepared in the same manner as in Example 4 but using the silica powder in an amount of 2.5 parts by weight. The content of the brilliant pigment in the brilliant ink was 13% by weight, the content of the silica powder was 0.5% by weight, $\eta_{100}$ at 35°C was 0.20 Pa · sec, and the reduction of weight when left to stand in an open atmosphere at 22°C was 6%.

By using a printer equipped with an engraved roll having a cell volume of 8 cc and a printing plate having a hardness of 70 degrees, the above prepared ink was printed onto a thin seamless can. The ink was favorably transferred and the print exhibited excellent brilliancy. The amount of the ink transferred was 21 mg/100 cm2. The printed can was heat-treated at 205°C for 2 minutes to cure the ink. The area ratio (S) covered with the brilliant pigment was 31% and the average particle diameter (D) was 8.3 μm. The transfer of ink, area ratio (S) covered with the brilliant pigment at the brilliantly printed portion and the average particle diameter (D) were nearly the same as those of Example 5. In this case, $D^2$ x S was 2100. The average thickness of the ink film after drying was 1.1 μm. A finishing varnish was applied onto the printed can and was dried in a customary manner to obtain excellent appearance with good brilliancy.

[Example 9]

A brilliant ink was prepared in the same manner as in Example 4 but using a silica powder (Seahoster KE-E90: Nihon Shokubai Co.) having an average particle diameter of 1 μm without effecting the kneading by three-roll mill. The content of the brilliant pigment in the brilliant ink was 13% by weight, the content of the silica powder was 5% by weight, $\eta_{100}$ at 35°C was 0.22 Pa·sec, and the reduction of weight when left to stand in an open atmosphere at 22°C was 6%.

By using a printer equipped with an engraved roll having a cell volume of 8 cc and a printing plate having a hardness of 70 degrees, the above prepared ink was printed onto a thin seamless can. The ink was favorably transferred and the print exhibited excellent brilliancy. The amount of the ink transferred was 22 mg/100 $cm^2$. The printed can was heat-treated at 205°C for 2 minutes to cure the ink. The area ratio (S) covered with the brilliant pigment was 30% and the average particle diameter (D) was 8.3 μm. The transfer of ink, area ratio (S) covered with the brilliant pigment at the brilliantly printed portion and the average particle diameter (D) were nearly the same as those of Example 5. In this case, $D^2$ x S was 2100. The average thickness of the ink film after drying was 1.2 μm. A finishing varnish was applied onto the printed can and was dried in a customary manner to obtain excellent appearance with good brilliancy.

[Example 10]

A brilliant ink was prepared in the same manner as in Example 4 but using a silica powder (R974: Nihon Aerosil Co.) having an average particle diameter of 0.01 μm in an amount of 2.5 parts by weight. The content of the brilliant pigment in the brilliant ink was 13% by weight, the content of the silica powder was 0.5% by weight, $\eta_{100}$ at 35°C was 0.21 Pa·sec, and the reduction of weight when left to stand in an open atmosphere at 22°C was 6%.

By using a printer equipped with an engraved roll having a cell volume of 8 cc and a printing plate having a hardness of 70 degrees, the above prepared ink was printed onto a thin seamless can. The ink was favorably transferred and the print exhibited excellent brilliancy. The amount of the ink transferred was 21 mg/100 $cm^2$. The printed can was heat-treated at 205°C for 2 minutes to cure the ink. The area ratio (S) covered with the brilliant pigment was 31% and the average particle diameter (D) was 8.4 μm. The transfer of ink, area ratio (S) covered with the brilliant pigment at the brilliantly printed portion and the average particle diameter (D) were nearly the same as those of Example 5. In this case, $D^2$ x S was 2200. The average thickness of the ink film after drying was 1.1 μm. A finishing varnish was applied onto the printed can and was dried in a customary manner to obtain excellent appearance with good brilliancy.

[Example 11]

A brilliant ink was prepared in the same manner as in Example 2 but using an aluminum paste of the leafing type having an average particle diameter of 5 μm in an amount of 47 parts by weight. The content of the brilliant pigment in the brilliant ink was 5% by weight, $\eta_{100}$ at 35°C was 0.19 Pa·sec, and the reduction of weight when left to stand in an open atmosphere at 22°C was 2%.

By using a printer equipped with an engraved roll having a cell volume of 8 cc and a printing plate having a hardness of 90 degrees, the above prepared ink was printed onto a thin seamless can. The ink was favorably transferred and the print exhibited excellent brilliancy. The amount of the ink transferred was 13 mg/100 $cm^2$. The printed can was heat-treated at 205°C for 2 minutes to cure the ink. The area ratio (S) covered with the brilliant pigment was 34%, the average particle diameter (D) was 3.0 μm, and $D^2$ x S was 300. The average thickness of the ink film after drying was 0.7 μm. A finishing varnish was applied onto the printed can and was dried in a customary manner to obtain excellent appearance with good brilliancy.

[Example 12]

An ink was prepared in the same manner as in Example 1 but using an aluminum paste of the nonleafing type having an average particle diameter of 15 μm in an amount of 550 parts by weight. The content of the brilliant pigment in the brilliant ink was 40% by weight, $\eta_{100}$ at 35°C was 0.63 Pa·sec, and the reduction of weight when left to stand in

an open atmosphere at 22°C was 18%.

By using a printer equipped with an engraved roll having a cell volume of 12 cc and a printing plate having a hardness of 70 degrees, the above prepared ink was printed onto a thin seamless can. The ink was favorably transferred and the print exhibited excellent brilliancy. The amount of the ink transferred was 26 mg/100 $cm^2$. The printed can was heat-treated at 205°C for 2 minutes to cure the ink. The area ratio (S) covered with the brilliant pigment was 57%, the average particle diameter (D) was 9.6 $\mu$m, and $D^2$ x S was 5300. The average thickness of the ink film after drying was 1.2 $\mu$m. A finishing varnish was applied onto the printed can and was dried in a customary manner to obtain excellent appearance with good brilliancy.

[Example 13]

An ink was prepared in the same manner as in Example 1 but using an aluminum paste of the nonleafing type having an average particle diameter of 25 $\mu$m in an amount of 70 parts by weight. The content of brilliant pigment in the brilliant ink was 10% by weight, $\eta_{100}$ at 35°C was 0.19 Pa·sec, and the reduction of weight when left to stand in an open atmosphere at 22°C was 4%.

By using a printer equipped with an engraved roll having a cell volume of 8 cc and a printing plate having a hardness of 70 degrees, the above prepared ink was printed onto a thin seamless can. The ink was favorably transferred and the print exhibited excellent brilliancy. The amount of the ink transferred was 15 mg/100 $cm^2$. The printed can was heat-treated at 205°C for 2 minutes to cure the ink. The area ratio (S) covered with the brilliant pigment was 10%, the average particle diameter (D) was 20 $\mu$m, and $D^2$ x S was 4000. The average thickness of the ink film after drying was 0.8 $\mu$m. A finishing varnish was applied onto the printed can and was dried in a customary manner to obtain excellent appearance with good brilliancy.

[Example 14]

An ink was prepared in the same manner as in Example 1 but using an aluminum paste of the nonleafing type having an average particle diameter of 15 $\mu$m in an amount of 70 parts by weight and another aluminum paste of the nonleaving type having an average particle diameter of 8 $\mu$m in an amount of 25 parts by weight. The content of the brilliant pigment in the brilliant ink was 13% by weight, $\eta_{100}$ at 35°C was 0.21 Pa·sec, and the reduction of weight when left to stand in an open atmosphere at 22°C was 6%.

By using a printer equipped with an engraved roll having a cell volume of 12 cc and a printing plate having a hardness of 70 degrees, the above prepared ink was printed onto a thin seamless can. The ink was favorably transferred and the print exhibited excellent brilliancy. The amount of the ink transferred was 24 mag/100 $cm^2$. The printed can was heat-treated at 205°C for 2 minutes to cure the ink. The area ratio (S) covered with the brilliant pigment at the brilliantly printed portion was 37%, the average particle diameter (D) was 5.9 $\mu$m, and $D^2$ x S was 1300. The average thickness of the ink film after drying was 1.2 $\mu$m. A finishing varnish was applied onto the printed can and was dried in a customary manner to obtain excellent appearance with good brilliancy.

[Example 15]

130 Parts by weight of a solid polyester resin (Bylon 220: Toyo Boseki Co.), 130 parts by weight of toluene and 80 parts by weight of a diethylene glycol butyl ether acetate were introduced into a four-way flask equipped with stirrer vanes, a thermometer and a cooling pipe, and were heated at 110°C with stirring to dissolve the polyester resin. The solution was cooled down to 40°C or lower, and to which were added 100 parts by weight of an amino resin (Cymel 235: Mitsui Cytech Co.) and 1.3 parts by weight of an acid catalyst (Catalyst 600: Mitsui Cytec Co.) with stirring to obtain a resin solution. To the resin solution was further added 95 parts by weight of an aluminum paste of the nonleafing type having an average particle diameter of 13 $\mu$m with stirring to disperse aluminum particles to a sufficient degree and to obtain a brilliant ink. The content of the brilliant pigment in the brilliant ink was 13% by weight, $\eta_{100}$ at 35°C was 0.063 Pa · sec, and the reduction of weight when left to stand in an open atmosphere at 22°C was 30%.

By using a printer equipped with an engraved roll having a cell volume of 8 cc and a printing plate having a hardness of 70 degrees, the above prepared ink was printed onto a sheet for a 200-ml welded can having a white coating on the surface of the side on where the printing was to be effected. The ink was favorably transferred and the print exhibited excellent brilliancy. The amount of the ink transferred was 14 mg/100 $cm^2$. The printed sheet was heat-treated at 205°C for 2 minutes to cure the ink. The area ratio (S) covered with the brilliant pigment at the brilliantly printed portion was 18%, the average particle diameter (D) was 8.2 $\mu$m, and $D^2$ x S was 1200. The average thickness of the ink film after drying was 0.5 $\mu$m. A finishing varnish was applied onto the printed can and was dried in a customary manner to obtain excellent appearance with good brilliancy.

[Example 16]

A brilliant ink was prepared in the same manner as in Example 15 but using an aluminum paste of the leafing type having an average particle diameter of 8 μm. The content of the brilliant pigment in the brilliant ink was 13% by weight, $\eta_{100}$ at 35°C was 0.068 Pa · sec, and the reduction of weight when left to stand in an open atmosphere at 22°C was 30%.

By using a printer equipped with an engraved roll having a cell volume of 5 cc and a printing plate having a hardness of 70 degrees, the above prepared ink was printed onto a sheet for a 200-ml welded can having a white coating on the surface of the side on where the printing was to be effected. The ink was favorably transferred and the print exhibited excellent brilliancy. The amount of the ink transferred was 5 mg/100 $cm^2$. The printed sheet was heat-treated at 205°C for 2 minutes to cure the ink. The area ratio (S) covered with the brilliant pigment at the brilliantly printed portion was 27%, the average particle diameter (D) was 4.3 μm, and $D^2$ x S was 500. The average thickness of the ink film after drying was 0.2 μm. A finishing varnish was applied onto the printed can and was dried in a customary manner to obtain excellent appearance with good brilliancy.

[Example 17]

300 Parts by weight of an alicyclic epoxy resin (UVR6110: Union Carbide Japan Co.), 50 parts by weight of a polyester resin (Bylon GK810: Toyo Boseki Co.) and 50 parts by weight of an oxetane alcohol (OXT-1: Toa Gosei Kagaku Kogyo Co.) were introduced into a four-way flask equipped with stirrer vanes, a thermometer and a cooling pipe, and were heated at 110°C with stirring to completely dissolve the polyester resin. The solution was cooled down to 40°C or lower, and to which were added 20 parts by weight of a photo initiator (UVI-6990: Union Carbide Japan Co.) and 95 parts by weight of an aluminum plate of the nonleafing type having an average particle diameter of 13 μm with stirring to disperse aluminum particles to a sufficient degree and to obtain a brilliant ink. The content of the brilliant pigment in the brilliant ink was 13% by weight, $\eta_{100}$ at 35°C was 2.0 Pa·sec, and the reduction of weight when left to stand in an open atmosphere at 22°C was 5%.

By using a printer equipped with an engraved roll having a cell volume of 18 cc and a printing plate having a hardness of 78 degrees, the above prepared ink was printed onto a sheet for a 200-ml welded can having a white coating on the surface of the side on where the printing was to be effected. The ink was favorably transferred and the print exhibited excellent brilliancy. The amount of the ink transferred was 40 mg/100 $cm^2$. The printed sheet was irradiated with ultraviolet rays of 1000 joules/$m^2$ by using a metal halide lamp to cure the ink. The area ratio (S) covered with the brilliant pigment at the brilliantly printed portion was 51%, the average particle diameter (D) was 8.0 μm, and $D^2$ x S was 3300. The average thickness of the ink film after drying was 3.1 μm. A finishing varnish was applied onto the printed can and was dried in a customary manner to obtain excellent appearance with good brilliancy.

[Example 18]

By using a printer equipped with an engraved roll having a cell volume of 58 cc and a printing plate having a hardness of 78 degrees, the ink of Example 17 was printed onto a sheet for a 200-ml welded can having a white coating on the surface of the side on where the printing was to be effected. The ink was favorably transferred and the print exhibited excellent brilliancy. The amount of the ink transferred was 110 mg/100 $cm^2$. The printed sheet was irradiated with ultraviolet rays of 1000 joules/$m^2$ by using a metal halide lamp to cure the ink. The area ratio (S) covered with the brilliant pigment at the brilliantly printed portion was 71%, the average particle diameter (D) was 7.0 μm, and $D^2$ x S was 3500. The average thickness of the ink film after drying was 10 μm. A finishing varnish was applied onto the printed can and was dried in a customary manner to obtain excellent appearance with good brilliancy.

[Comparative Example 1]

A brilliant ink was prepared in the same manner as in Example 2 but using aluminum paste of the nonleafing type having an average particle diameter of 4 μm. The content of the brilliant pigment in the brilliant ink was 7% by weight, $\eta_{100}$ at 35°C was 0.20 Pa·sec, and the reduction of weight when left to stand in an open atmosphere at 22°C was 5%.

By using a printer equipped with an engraved roll having a cell volume of 8 cc and a printing plate having a hardness of 70 degrees, the above prepared ink was printed onto a thin seamless can. The print was dark and desired brilliant feeling was not obtained. The amount of the ink transferred was 15 mg/100 $cm^2$. The printed can was heat-treated at 205°C for 2 minutes to cure the ink. The area ratio (S) covered with the brilliant pigment at the brilliantly printed portion was 59%, the average particle diameter (D) was 1.9 μm, and $D^2$ x S was 210. The average thickness of the ink film after drying was 0.8 μm. A finishing varnish was applied onto the printed can and was dried in a customary manner

to obtain improved luster but without improvement in the brilliancy.

[Comparative Example 2]

A brilliant ink was prepared in the same manner as in Example 1 but using aluminum paste of the nonleafing type having an average particle diameter of 30 μm. The content of the brilliant pigment in the brilliant ink was 13% by weight, $\eta_{100}$ at 35°C was 0.20 Pa · sec, and the reduction of weight when left to stand in an open atmosphere at 22°C was 6%.

By using a printer equipped with an engraved roll having a cell volume of 12 cc and a printing plate having a hardness of 70 degrees, the above prepared ink was printed onto a thin seamless can. Though the print was glittering, the particles of the brilliant pigment was so large that a difference was great between the portions where the pigment existed and the portions where no pigment existed, and it was not possible to obtain brilliant feeling maintaining a good balance. The amount of the ink transferred was 23 mg/100 $cm^2$. The printed can was heat-treated at 205°C for 2 minutes to cure the ink. The area ratio (S) covered with the brilliant pigment at the brilliantly printed portion was 15%, the average particle diameter (D) was 22 μm, and $D^2$ x S was 7300. The average thickness of the ink film after drying was 1.2 μm. A finishing varnish was applied onto the printed can and was dried in a customary manner to obtain improved luster but without improvement in the brilliancy.

[Comparative Example 3]

A brilliant ink was prepared in the same manner as in Example 1 but blending the aluminum paste in an amount of 25 parts by weight. The content of the brilliant pigment in the brilliant ink was 4% by weight, $\eta_{100}$ at 35°C was 0.20 Pa·sec, and the reduction of weight when left to stand in an open atmosphere at 22°C was 2%.

By using a printer equipped with an engraved roll having a cell volume of 12 cc and a printing plate having a hardness of 70 degrees, the above prepared ink was printed onto a thin seamless can. The amount of particles of the brilliant pigment was too small, and brilliant feeling was not obtained. The amount of the ink transferred was 22 mg/100 $cm^2$. The printed can was heat-treated at 205°C for 2 minutes to cure the ink. The area ratio (S) covered with the brilliant pigment at the brilliantly printed portion was 8%, the average particle diameter (D) was 8.9 μm, and $D^2$ x S was 630. The average thickness of the ink film after drying was 1.2 μm. A finishing varnish was applied onto the printed can and was dried in a customary manner to obtain improved luster but without improvement in the brilliancy.

[Comparative Example 4]

A brilliant ink was prepared in the same manner as in Example 1 but blending the aluminum paste in an amount of 650 parts by weight. The content of the brilliant pigment in the brilliant ink was 43% by weight, $\eta_{100}$ at 35°C was 1.1 Pa · sec, and the reduction of weight when left to stand in an open atmosphere at 22°C was 19%.

By using a printer equipped with an engraved roll having a cell volume of 12 cc and a printing plate having a hardness of 70 degrees, the above prepared ink was printed onto a thin seamless can. The amount of particles of the brilliant pigment was so large that the ink was poorly transferred and the printing could not be conducted.

[Comparative Example 5]

200 Parts by weight of a solid polyester resin (Bylon 220: Toyo Boseki Co.) and 115 parts by weight of a diethylene glycol butyl ether acetate were introduced into a four-way flask equipped with stirrer vanes, a thermometer and a cooling pipe, and were heated at 110°C with stirring to dissolve the polyester resin. The solution was cooled down to 40°C or lower, and to which were added 100 parts by weight of an amino resin (Cymel 235: Mitsui Cytech Co.) and 2.5 parts by weight of an acid catalyst (Catalyst 600: Mitsui Cytec Co.) with stirring. Then, 100 parts by weight of an aluminum paste of the nonleafing type having an average particle diameter of 13 μm was added thereto with stirring to disperse aluminum particles to a sufficient degree and to obtain a brilliant ink. The content of the brilliant pigment in the brilliant ink was 13% by weight, $\eta_{100}$ at 35°C was 2.4 Pa·sec, and the reduction of weight when left to stand in an open atmosphere at 22°C was 5%.

By using a printer equipped with an engraved roll having a cell volume of 12 cc and a printing plate having a hardness of 70 degrees, the above prepared ink was printed onto a thin seamless can. The print exhibited excellent brilliancy but $\eta_{100}$ at 35°C was larger than the range specified by the present invention and, hence, the ink tended to stay on the printing plate. Therefore, the print was thick as a whole and the reproduceability was very poor.

[Comparative Example 6]

130 Parts by weight of a solid polyester resin (Bylon 220: Toyo Boseki Co.), 160 parts by weight of toluene and 50 parts by weight of a diethylene glycol butyl ether acetate were introduced into a four-way flask equipped with stirrer vanes, a thermometer and a cooling pipe, and were heated at 110°C with stirring to dissolve the polyester resin. The solution was cooled down to 40°C or lower, and to which were added 100 parts by weight of an amino resin (Cymel 235: Mitsui Cytech Co.) and 1.3 parts by weight of an acid catalyst (Catalyst 600: Mitsui Cytec Co.) with stirring to obtain a resin solution. To the resin solution was further added 95 parts by weight of an aluminum paste of the nonleafing type having an average particle diameter of 13 μm with stirring to disperse aluminum particles to a sufficient degree and to obtain a brilliant ink. The content of the brilliant pigment in the brilliant ink was 13% by weight, $\eta_{100}$ at 35°C was 0.053 Pa · sec, and the reduction of weight when left to stand in an open atmosphere at 22°C was 35%.

By using a printer equipped with an engraved roll having a cell volume of 8 cc and a printing plate having a hardness of 70 degrees, the above prepared ink was printed onto a thin seamless can. During the printing, however, the ink dried on the printing plate and on the blanket; i.e., the ink deposited on the printing plate and on the blanket, and a very little ink was transferred onto the can.

[Comparative Example 7]

A brilliant ink was prepared in the same manner as in Example 4 but using a silica powder (Cylosphere C-1504: Fuji Silicia Kagaku Co.) having an average particle diameter of 4 μm without effecting the kneading by three-roll mill. The content of the brilliant pigment in the brilliant ink was 13% by weight, the content of the silica powder was 5% by weight, $\eta_{100}$ at 35°C was 0.36 Pa·sec, and the reduction of weight when left to stand in an open atmosphere at 22°C was 6%.

By using a printer equipped with an engraved roll having a cell volume of 12 cc and a printing plate having a hardness of 70 degrees, the above prepared ink was printed onto a thin seamless can. The silica powder having an average particle diameter of as large as 4 μm tended to be left on the blanket. The amount transferred was 22 mg/100 $cm^2$ and the effect of fine transparent particles that were added was not recognized. The ink film on the printed can after cured was rough offering poor appearance but exhibiting favorable glittering feeling. The printed can was heat-treated at 205°C for 2 minutes to cure the ink. The area ratio (S) covered with the brilliant pigment was 24%, the average particle diameter (D) was 8.3 μm and $D^2$ x S was 1700. The average thickness of the ink film after drying was 1.2 μm. A finishing varnish was applied onto the printed can and was dried in a customary manner to obtain improved luster but rough appearance of the print.

[Comparative Example 8]

A brilliant ink was prepared in the same manner as in Example 4 but blending the silica powder in an amount of 2 parts by weight. The content of the brilliant pigment in the brilliant ink was 13% by weight, the content of the silica powder was 0.4% by weight, $\eta_{100}$ at 35°C was 0.20 Pa · sec, and the reduction of weight when left to stand in an open atmosphere at 22°C was 6%.

By using a printer equipped with an engraved roll having a cell volume of 12 cc and a printing plate having a hardness of 70 degrees, the above prepared ink was printed onto a thin seamless can. The amount of the ink transferred was 24 mg/100 $cm^2$. The printed can was heat-treated at 205°C for 2 minutes to cure the ink. The area ratio (S) covered with the brilliant pigment at the brilliantly printed portion was 29%, the average particle diameter (D) was 8.1 μm, and $D^2$ x S was 1900. The concentration of the silica powder was smaller than the range specified by the present invention, and the effect of transparent fine particles that were added was not recognized. Brilliancy was good. The average thickness of the ink film after drying was 1.2 μm. A finishing varnish was applied onto the printed can and was dried in a customary manner to obtain excellent appearance with good brilliancy.

[Comparative Example 9]

A brilliant ink was prepared in the same manner as in Example 6 but using the silica powder in an amount of 150 parts by weight. The content of the brilliant pigment in the obtained brilliant ink was 13% by weight, the content of the silica powder was 22% by weight, $\eta_{100}$ at 35°C was 0.61 Pa·sec, and the reduction of weight when left to stand in an open atmosphere at 22°C was 5%.

By using a printer equipped with an engraved roll having a cell volume of 8 cc and a printing plate having a hardness of 70 degrees, the above prepared ink was printed onto a thin seamless can. The amount of the ink transferred was 25 mg/100 $cm^2$. The printed can was heat-treated at 205°C for 2 minutes to cure the ink. The area ratio (S) covered with the brilliant pigment at the brilliantly printed portion was 32%, the average particle diameter (D) was 8.4 μm, and

$D^2$ x S was 2300. Though brilliancy was good, the surfaces of the brilliant pigment had been covered with fine silica particles to an excess degree. Therefore, glittering feeling was slightly interior to that of Example 7.

The average thickness of the ink film after drying was 1.1 μm. A finishing varnish was applied onto the printed can and was dried in a customary manner to obtain excellent appearance with good brilliancy.

[Comparative Example 10]

The printing was conducted in the same manner as in Example 1 but using the printing plate having a hardness of 97 degrees. In this case, the brilliant pigment deposited on the printing plate, only part of fine brilliant pigment components was transferred onto the can, and the printing could not be conducted.

[Comparative Example 11]

The printing was conducted in the same manner as in Example 17 but using an engraved roll having a cell volume of 3 cc. In this case, there was a great change in the amount of transfer of the ink, and the print exhibited poor appearance. There was not obtained brilliant feeling, either. The printed plate was irradiated with an ultraviolet ray of 1000 joules/$m^2$ by using a metal halide lamp to cure the ink. The average thickness of the cured ink film was 0.1 μm. When the average thickness of the ink film was smaller than the range of the present invention, as described above, the amount of ink transfer varied to a conspicuous degree, and there was not obtained a print that offerred good appearance.

[Comparative Example 12]

The printing was conducted in the same manner as in Example 17 but using an engraved roll having a cell volume of 69 cc. The amount of the ink transferred was 150 mg/100 $cm^2$. The brilliant feeling was good but the print was too thick and the picture could be reproduced very poorly. The printed plate was irradiated with an ultraviolet ray of 1000 joules/$m^2$ by using a metal halide lamp to cure the ink. The area ratio (S) covered with the brilliant pigment at the brilliantly printed portion was 78%, the average particle diameter (D) was 7.0 μm. and $D^2$ x S was 3800. The average thickness of the ink film after drying was 12 μm. A finishing varnish was applied onto the printed can and was dried in a customary manner. However, a step was conspicuous between the picture-bearing portion and the portion without picture, the picture was poorly reproduced, and the print exhibited very poor appearance.

[Comparative Example 13]

250 Parts by weight of a liquid polyester resin (NS2400: Asahi Denka Kogyo Co.) was introduced into a stainless steel cup followed by the addition of 150 parts by weight of a diethylene glycol butyl ether acetate with stirring. Next, 150 parts by weight of an amino resin (Cymel 235: Mitsui Cytech Co.) and 2.0 parts by weight of an acid catalyst (Catalyst 600: Mitsui Cytec Co.) were added thereto with stirring, followed by the addition of 45 parts by weight of an aluminum paste of the nonleafing type having an average particle diameter of 8 μm with stir-ing to disperse aluminum particles to a sufficient degree and to obtain a brilliant ink. The content of the brilliant pigment in the brilliant ink was 5% by weight, $\eta_{100}$ at 35°C was 0.19 Pa·sec, and the reduction of weight when left to stand in an open atmosphere at 22°C was 2%.

By using a printer equipped with an engraved roll having a cell volume of 5 cc and a printing plate having a hardness of 70 degrees, the above prepared ink was printed onto a thin seamless can. The ink was favorably transferred but the print exhibited neither sufficient degree of glittering nor the concealing effect. The amount of the ink transferred was 9 mg/100 $cm^2$. The printed can was heat-treated at 205°C for 2 minutes to cure the ink. The area ratio (S) covered with the brilliant pigment at the brilliantly printed portion was 15%, the average particle diameter (D) was 4.3 μm, and $D^2$ x S was 280. The average thickness of the ink film after drying was 0.5 μm. A finishing varnish was applied onto the printed can and was dried in a customary manner to obtain improved luster without, however, improvement in the brilliancy.

Table 1-1

| | Ink properties | | | | | | Cell volume of engraved roll (cc/m²) | Hardness of print plate (JISA degrees) |
|---|---|---|---|---|---|---|---|---|
| | Ink blend | | | | Apparent viscosity at 35°C $100sec^{-1}$ (Pa·sec) | Weight reduction in open atmosphere at 22°C (%) | | |
| | Brilliant pigment | | Transparent fine particles | | | | | |
| | Kind | Content (wt %) | Kind | Content (wt %) | | | | |
| Ex.1 | nonleafing Al, 13μm in average diameter | 13 | — | — | 0.2 | 6 | 12 | 70 |
| Ex.2 | nonleafing Al, 8μm in average diameter | 7 | - | - | 0.19 | 3 | 12 | 70 |
| Ex.3 | Ti oxide-coated mica, 16μm in average diameter | 21 | - | - | 0.24 | 1 | 12 | 70 |
| Ex.4 | nonleafing Al, 13μm in average diameter | 13 | silica powder, 0.04μm in average diameter | 5 | 0.25 | 6 | 12 | 70 |
| Ex.5 | ditto | 13 | ditto | 5 | 0.25 | 6 | 8 | 70 |
| Ex.6 | ditto | 13 | silica powder, 0.3μm in average diameter | 5 | 0.23 | 6 | 8 | 70 |
| Ex.7 | ditto | 13 | ditto | 20 | 0.53 | 6 | 8 | 70 |
| Ex.8 | ditto | 13 | silica powder, 0.04μm in average diameter | 0.5 | 0.2 | 6 | 8 | 70 |
| Ex.9 | ditto | 13 | silica powder, 1 μm in average diameter | 5 | 0.22 | 6 | 8 | 70 |

Note 1) Al pigments are those produced by Toyo Aluminum Co., all exhibiting excellent surface smoothness.
Note 2) Ti oxide-coated mica is of the silver type produced by Merc Japan Co.

Table 1-2

| | Ink properties | | | | | | Cell volume of engraved roll ($cc/m^2$) | Hardness of print plate (JISA degrees) |
|---|---|---|---|---|---|---|---|---|
| | Ink blend | | | | Apparent viscosity at 35°C $100sec^{-1}$ (Pa·sec) | Weight reduction in open atmosphere at 22°C (%) | | |
| | Brilliant pigment | | Transparent fine particles | | | | | |
| | Kind | Content (wt %) | Kind | Content (wt %) | | | | |
| Ex.10 | ditto | 13 | silica powder, 0.01µm in average diameter | 0.5 | 0.21 | 6 | 8 | 70 |
| Ex.11 | nonleafing Al, 5µm in average diameter | 5 | — | — | 0.19 | 2 | 8 | 90 |
| Ex.12 | nonleafing Al, 15µm in average diameter | 40 | — | — | 0.63 | 18 | 12 | 70 |
| Ex.13 | nonleafing Al, 25µm in average diameter | 10 | — | — | 0.19 | 4 | 8 | 70 |
| Ex.14 | nonleafing Al, 15µm in average diameter<br>nonleafing Al, 8µm in average diameter | 13 | — | — | 0.21 | 6 | 12 | 70 |
| Ex.15 | nonleafing Al, 13µm in average diameter | 13 | — | — | 0.063 | 30 | 8 | 70 |

Note 1) Al pigments are those produced by Toyo Aluminum Co., all exhibiting excellent surface smoothness.

Note 2) Ti oxide-coated mica is of the silver type produced by Merc Japan Co.

Table 1-3

| | Ink properties | | | | | | Cell volume of engraved roll ($cc/m^2$) | Hardness of print plate (JISA degrees) |
|---|---|---|---|---|---|---|---|---|
| | Ink blend | | | | Apparent viscosity at 35°C $100sec^{-1}$ (Pa·sec) | Weight reduction in open atmosphere at 22°C (%) | | |
| | Brilliant pigment | | Transparent fine particles | | | | | |
| | Kind | Content (wt %) | Kind | Content (wt %) | | | | |
| Ex.16 | leafing Al, 8μm in average diameter | 13 | - | — | 0.068 | 30 | 5 | 70 |
| Ex.17 | nonleafing Al, 13μm in average diameter | 13 | - | — | 2 | 5 | 18 | 78 |
| Ex.18 | ditto | 13 | — | — | 2 | 5 | 58 | 78 |
| Comp. Ex.1 | nonleafing Al, 4μm in average diameter | 7 | — | — | 0.2 | 5 | 8 | 70 |
| Comp. Ex.2 | nonleafing Al, 30μm in average diameter | 13 | — | — | 0.2 | 6 | 12 | 70 |
| Comp. Ex.3 | nonleafing Al, 13μm in average diameter | 4 | — | — | 0.2 | 2 | 12 | 70 |
| Comp. Ex.4 | ditto | 43 | — | | 1.1 | 19 | 12 | 70 |
| Comp. Ex.5 | nonleafing Al, 13μm in average diameter | 13 | — | — | 2.4 | 5 | 12 | 70 |

Note 1) Al pigments are those produced by Toyo Aluminum Co., all exhibiting excellent surface smoothness.
Note 2) Ti oxide-coated mica is of the silver type produced by Merc Japan Co.

Table 1-4

| | Ink properties | | | | | | Cell volume of engraved roll ($cc/m^2$) | Hardness of print plate (JISA degrees) |
|---|---|---|---|---|---|---|---|---|
| | Ink blend | | | | Apparent viscosity at 35°C $100sec^{-1}$ (Pa·sec) | Weight reduction in open atmosphere at 22°C (%) | | |
| | Brilliant pigment | | Transparent fine particles | | | | | |
| | Kind | Content (wt %) | Kind | Content (wt %) | | | | |
| Comp. Ex.6 | ditto | 13 | - | — | 0.053 | 35 | 8 | 70 |

Table continued

| | Ink properties | | | | | | Cell volume of engraved roll ($cc/m^2$) | Hardness of print plate (JISA degrees) |
|---|---|---|---|---|---|---|---|---|
| | Ink blend | | | | Apparent viscosity at 35°C $100sec^{-1}$ (Pa·sec) | Weight reduction in open atmosphere at 22°C (%) | | |
| | Brilliant pigment | | Transparent fine particles | | | | | |
| | Kind | Content (wt %) | Kind | Content (wt %) | | | | |
| Comp. Ex.7 | ditto | 13 | silica powder, 4μm in average diameter | 5 | 0.36 | 6 | 12 | 70 |
| Comp. Ex.8 | ditto | 1.3 | silica powder, 0.04μm in average diameter | 0.4 | 0.2 | 6 | 12 | 70 |
| Comp. Ex.9 | ditto | 13 | silica powder, 0.3μm in average diameter | 22 | 0.61 | 5 | 8 | 70 |
| Comp. Ex.10 | ditto | 13 | — | — | 0.2 | 6 | 12 | 97 |
| Comp. Ex.11 | ditto | 13 | — | — | 2 | 5 | 3 | 78 |
| Camp. Ex.12 | ditto | 13 | — | — | 2 | 5 | 69 | 78 |
| Camp. Ex.13 | nonleafing Al, 8μm in average diameter | 5 | — | — | 0.19 | 2 | 5 | 70 |

Note 1) Al pigments are those produced by Toyo Aluminum Co., all exhibiting excellent surface smoothness.
Note 2) Ti oxide-coated mica is of the silver type produced by Merc Japan Co.

Table 2-1

| | To-be-printed material | Printed results | | | | | | |
|---|---|---|---|---|---|---|---|---|
| | | Amount of ink transfer per 100 $cm^2$ (mg) | Area S (%) covered with pigment | Average diameter D of pigment (μm) | $D^2$ x S | Average thickness of cured ink film (μm) | Printability | Brilliancy of print and appearance |
| Ex.1 | thin seamless can | 24 | 28 | 8 | 1800 | 1.2 | good ink transfer | good |
| Ex.2 | ditto | 22 | 39 | 4.1 | 660 | 1.2 | ditto | good |
| Ex.3 | ditto | 25 | 44 | 9.1 | 3660 | 1.2 | ditto | good |

Table continued

| | To-be-printed material | Printed results | | | | | | |
|---|---|---|---|---|---|---|---|---|
| | | Amount of ink transfer per 100 $cm^2$ (mg) | Area S (%) covered with pigment | Average diameter D of pigment (μm) | $D^2$ x S | Average thickness of cured ink film (μm) | Printability | Brilliancy of print and appearance |
| Ex.4 | ditto | 33 | 43 | 8.4 | 3000 | 1.6 | improved ink transfer | brilliancy improved by silica powder |
| Ex.5 | ditto | 23 | 33 | 8.5 | 2400 | 1.2 | ditto | good |
| Ex.6 | ditto | 22 | 31 | 8.4 | 2200 | 1.2 | ditto | good |
| Ex.7 | ditto | 23 | 32 | 8.4 | 2300 | 1.1 | ditto | good |
| Ex.8 | ditto | 21 | 31 | 8.3 | 2100 | 1.1 | ditto | good |
| Ex.9 | ditto | 22 | 30 | 8.3 | 2100 | 1.2 | ditto | good |
| Ex.10 | ditto | 21 | 31 | 8.4 | 2200 | 1.1 | ditto | good |
| Ex.11 | ditto | 13 | 34 | 3 | 300 | 0.7 | good ink transfer | good |
| Ex.12 | ditto | 26 | 57 | 9.6 | 5300 | 1.2 | ditto | good |
| Ex.13 | ditto | 15 | 10 | 20 | 4000 | 0.8 | ditto | good |
| Ex.14 | ditto | 24 | 37 | 5.9 | 1300 | 1.2 | ditto | good |
| Ex.15 | sheet for welded can | 14 | 18 | 8.2 | 1200 | 0.5 | ditto | good |
| Ex.16 | ditto | 5 | 27 | 4.3 | 500 | 0.2 | ditto | good |
| Ex.17 | ditto | 40 | 51 | 8 | 3300 | 3.1 | ditto | good |
| Ex.18 | ditto | 110 | 71 | 7 | 3500 | 10 | ditto | good |

Table 2-2

| | To-be-printed material | Printed results | | | | | | |
|---|---|---|---|---|---|---|---|---|
| | | Amount of ink transfer per 100 $cm^2$ (mg) | Area S (%) covered with pigment | Average diameter D of pigment (μm) | $D^2 \times S$ | Average thickness of cured ink film (μm) | Printability | Brilliancy of print and appearance |
| Comp. Ex.1 | thin seamless can | 15 | 59 | 1.9 | 210 | 0.8 | good ink transfer | dark |
| Comp. Ex.2 | ditto | 23 | 15 | 22 | 7300 | 1.2 | ditto | poor balance of brilliancy |
| Comp. Ex.3 | ditto | 22 | 8 | 8.9 | 630 | 1.2 | ditto | insufficient brilliancy |
| Comp. Ex.4 | ditto | | | — not measurable — | | | transfer was poor and not printed | not evaluated |
| Comp. Ex.5 | ditto | | | — not measurable — | | | ink was viscous, deposited, thickly printed poor reproduceability | good brilliancy, bad reproduceability |
| Comp. Ex.6 | ditto | | | — not measurable — | | | ink depositedon plate and blanket, poorly transferred onto can | not evaluated |
| Comp. Ex.7 | ditto | 22 | 24 | 8.3 | 1700 | 1.2 | silica powder poorly transferred, poor appearance of ink film | good brilliancy rough appearance due to |
| Comp. Ex.8 | ditto | 24 | 29 | 8.1 | 1900 | 1.2 | no difference from no addition of transparent fine particles | good |
| Comp. Ex.9 | ditto | 25 | 32 | 8.4 | 2300 | 1.1 | transfer amount and covered area nearly equal to Ex.7 | poor glittering |

Table continued

| | To-be-printed material | Printed results | | | | | | |
|---|---|---|---|---|---|---|---|---|
| | | Amount of ink transfer per 100 $cm^2$ (mg) | Area S (%) covered with pigment | Average diameter D of pigment (μm) | $D^2 \times S$ | Average thickness of cured ink film (μm) | Printability | Brilliancy of print and appearance |
| Comp. Ex.10 | thin seamless can | | — not measurable — | | | not measurable | pigment deposits on plate, fine powder only is transferred | not evaluated |

Table 2-3

| | To-be-printed material | Printed results | | | | | | |
|---|---|---|---|---|---|---|---|---|
| | | Amount of ink transfer per 100 $cm^2$ (mg) | Area S (%) covered with pigment | Average diameter D of pigment ($\mu$m) | $D^2$ x S | Average thickness of cured ink film ($\mu$m) | Printability | Brilliancy of print and appearance |
| Comp. Ex.11 | sheet for welded can | | - not measurable — | | | 0.1 | transferred too little and irregularly | not evaluated |
| Comp. Ex.12 | sheet for welded can | 150 | 78 | 7 | 3800 | 12 | good ink transfer | good brilliancy, poor reproduceability, step between picture portion and non-pictire portion, poor appearance |
| Comp. Ex.13 | thin seamless can | 9 | 15 | 4.3 | 280 | 0.5 | good ink transfer | poor brilliancy |

## Claims

1. The use of a printing ink containing from 5 to 40% by weight of at least one brilliant pigment selected from the group consisting of aluminum flakes and a pearl pigment coated with fine particles and having an average particle diameter (as measured by a laser scattering method) of from 5 to 25 $\mu$m, and the printing ink further having an apparent viscosity $\eta_{100}$ of not larger than 2 Pa·sec at 35°C and at a shearing rate of 100 $sec^{-1}$ in a printing method which uses a printing plate having a JISA hardness of not larger than 90 degrees, transfers a printing ink on the printing plate onto a blanket, and transfers the printing ink on the blanket onto a to-be-printed material.

2. The use of a printing ink according to claim 1, wherein the reduction of weight of the ink of when it is left to stand in an open atmosphere at 22°C for one hour is not larger than 30%.

3. The use of a printing ink according to claim 1 or 2, wherein the ink contains fine transparent particles having an average particle diameter of from 0.01 to 1 $\mu$m in an amount of from 0.5 to 20% by weight.

4. A printing method by transferring a printing ink on a printing plate onto a blanket and transferring the printing ink on the blanket onto a to-be-printed material, the printing ink containing from 5 to 40% by weight of at least one brilliant pigment selected from the group consisting of aluminum flakes and a pearl pigment coated with fine particles and having an average particle diameter of from 5 to 25 $\mu$m, the printing ink having an apparent viscosity $\eta_{100}$ of not larger than 2 Pa·sec at 35°C and at a shearing rate of 100 $sec^{-1}$, and the printing plate having a JISA hardness of not larger than 90 degrees.

5. A printed packaging material obtained by the method of claim 7 on which is formed a printed ink layer containing a brilliant pigment selected from the group consisting of aluminum flakes and a pearl pigment coated with fine particles, and on said printed ink layer is further formed a clear coating, said printed ink layer having an average film thickness of from 0.2 to 10 $\mu$m, the brilliant pigment particles present in said printed ink layer having an average particle diameter (D) of from 3 to 20 $\mu$m as calculated from the areas thereof, and the area ratio (S) occupied by the brilliant pigment particles being not smaller than 10%.

**6.** A printed packaging material according to claim 5, wherein said average particle diameter (D) and said area ratio (S) satisfy a relationship, $D^2 \times S \geqq 300$.

**7.** A printed packaging material according to claim 5 or 6, wherein fine transparent particles are contained in said printing ink.

**8.** A printed packaging material according to any one of claims 5 to 7, wherein the packaging material is a container or a container closure.

**9.** A printed packaging material according to any one of claims 5 to 8, wherein the printed ink layer is applied onto the outer surface of the packaging member by offset.

**10.** A printing method according to claim 4, wherein the printing ink is sucked and is fed to the printing plate by using an engraved roller.

**Patentansprüche**

**1.** Verwendung einer Druckfarbe mit einem Gehalt von 5 bis 40 Gew.% mindestens eines Brillantpigments, das aus der Gruppe der Aluminiumblättchen und eines Perlglanzpigments, beschichtet mit feinen Teilchen und mit einem durchschnittlichen Teilchendurchmesser (gemessen durch eine Laserstreumethode) von 5 bis 25 μm, ausgewählt ist, wobei die Druckfarbe ferner eine scheinbare Viskosität $\eta_{100}$ von nicht über 2 Pa·s bei 35 °C und einer Schergeschwindigkeit von 100 $s^{-1}$ aufweist, bei einem Druckverfahren, bei dem eine Druckplatte mit einer JISA-Härte von nicht über 90 Grad benutzt, eine auf der Druckplatte befindliche Druckfarbe auf ein Drucktuch übertragen und die auf dem Drucktuch vorliegende Druckfarbe auf das zu bedruckende Material überführt wird.

**2.** Verwendung einer Druckfarbe nach Anspruch 1, worin die Gewichtsabnahme der Druckfarbe beim Stehenlassen an einer offenen Atmosphäre bei 22 °C während einer Stunde nicht mehr als 30 % beträgt.

**3.** Verwendung einer Druckfarbe nach Anspruch 1 oder 2, worin die Druckfarbe feine transparente Teilchen mit einem durchschnittlichen Teilchendurchmesser von 0,01 bis 1 μm in einer Menge von 0,5 bis 20 Gew.% enthält.

**4.** Druckverfahren durch Übertragen einer auf einer Druckplatte befindlichen Druckfarbe auf ein Drucktuch und Überführen der auf dem Drucktuch vorliegenden Druckfarbe auf ein zu bedruckendes Material, wobei die Druckfarbe 5 bis 40 Gew.% mindestens eines Brillantpigments enthält, das aus der Gruppe der Aluminiumblättchen und eines Perlglanzpigments, beschichtet mit feinen Teilchen und mit einem durchschnittlichen Teilchendurchmesser von 5 bis 25 μm, ausgewählt ist, wobei die Druckfarbe eine scheinbare Viskosität $\eta_{100}$ von nicht über 2 Pa·s bei 35 °C und einer Schergeschwindigkeit von 100 $s^{-1}$ sowie die Druckplatte eine JISA-Härte von nicht über 90 Grad aufweist.

**5.** Bedrucktes Verpackungsmaterial, erhalten durch das Verfahren gemäß Anspruch 4, auf dem eine Druckfarbenschicht ausgebildet ist, die ein Brillantpigment enthält, das aus der Gruppe der Aluminiumblättchen und eines Perlglanzpigments, beschichtet mit feinen Teilchen, ausgewählt ist, wobei auf der Druckfarbenschicht ferner eine klare Beschichtung gebildet worden ist und die Druckfarbenschicht eine durchschnittliche Filmdicke von 0,2 bis 10 μm aufweist, die in der Druckfarbenschicht vorliegenden Brillantpigmentteilchen einen durchschnittlichen Teilchendurchmesser (D) von 3 bis 20 μm, berechnet aus ihren Flächen, aufweisen sowie das von den Brillantpigmentteilchen belegte Flächenverhältnis (S) nicht kleiner als 10 % ist.

**6.** Bedrucktes Verpackungsmaterial nach Anspruch 5, worin der genannte durchschnittliche Teilchendurchmesser (D) und das genannte Flächenverhältnis (S) die Beziehung $D^2 \times S \geq 300$ erfüllen.

**7.** Bedrucktes Verpackungsmaterial nach Anspruch 5 oder 6, worin die Druckfarbe feine transparente Teilchen enthält.

**8.** Bedrucktes Verpackungsmaterial nach einem der Ansprüche 5 bis 7, worin das Verpackungsmaterial ein Behälter oder ein Behälterverschluß ist.

**9.** Bedrucktes Verpackungsmaterial nach einem der Ansprüche 5 bis 8, worin die Druckfarbenschicht durch Offsetdruck auf die Außenoberfläche des Verpackungselements aufgebracht ist.

**10.** Druckverfahren nach Anspruch 4, worin die Druckfarbe angesaugt und unter Verwendung einer Prägewalze der Druckplatte zugeführt wird.

## Revendications

**1.** Utilisation d'une encre d'impression contenant 5 à 40 % en poids d'au moins un pigment brillant choisi dans le groupe formé par des paillettes d'aluminium et un pigment nacré revêtu de fines particules et ayant un diamètre moyen de particules (tel que mesuré par une technique de diffusion laser) de 5 à 25 $\mu$m, et l'encre d'impression ayant de plus une viscosité apparente $\eta_{100}$ non supérieure à 2 Pa.s à 35°C et à une vitesse de cisaillement de 100 $s^{-1}$, dans un procédé d'impression qui utilise une plaque d'impression ayant une dureté JISA non supérieure à 90 degrés, transfère une encre d'impression présente sur la plaque d'impression à un blanchet et transfère l'encre d'impression présente sur le blanchet à un matériau à imprimer.

**2.** Utilisation d'une encre d'impression selon la revendication 1, dans laquelle la réduction de poids de l'encre lorsqu'elle est laissée au repos dans une atmosphère libre à 22°C pendant une heure n'est pas supérieure à 30 %.

**3.** Utilisation d'une encre d'impression selon la revendication 1 ou 2, dans laquelle l'encre contient de fines particules transparentes ayant un diamètre moyen de particules de 0,01 à 1 $\mu$m en une quantité de 0,5 à 20 % en poids.

**4.** Procédé d'impression par transfert d'une encre d'impression présente sur une plaque d'impression à un blanchet et transfert de l'encre d'impression présente sur le blanchet à un matériau à imprimer, l'encre d'impression contenant 5 à 40 % en poids d'au moins un pigment brillant choisi dans le groupe formé par des paillettes d'aluminium et un pigment nacré revêtu de fines particules et ayant un diamètre moyen de particules de 5 à 25 $\mu$m, l'encre d'impression ayant une viscosité apparente $\eta_{100}$ non supérieure à 2 Pa.s à 35°C et à une vitesse de cisaillement de 100 $s^{-1}$, et la plaque d'impression ayant une dureté JISA non supérieure à 90 degrés.

**5.** Matériau d'emballage imprimé, obtenu par le procédé de la revendication 4, sur lequel est formée une couche d'encre imprimée contenant un pigment brillant choisi dans le groupe formé par des paillettes d'aluminium et un pigment nacré revêtu de fines particules et, sur ladite couche d'encre imprimée, est encore formé un revêtement transparent, ladite couche d'encre imprimée ayant une épaisseur moyenne de film de 0,2 à 10 $\mu$m, les particules de pigment brillant présentes dans ladite couche d'encre imprimée ayant un diamètre moyen de particules (D) de 3 à 20 $\mu$m, tel que calculé d'après leurs aires, et la proportion d'aire (S) occupée par les particules de pigment brillant n'étant pas inférieure à 10 %.

**6.** Matériau d'emballage imprimé selon la revendication 5, dans lequel ledit diamètre moyen de particules (D) et ladite proportion d'aire (S) satisfont la relation $D^2 \times S \geq 300$.

**7.** Matériau d'emballage imprimé selon la revendication 5 ou 6, dans lequel de fines particules transparentes sont contenues dans ladite encre d'impression.

**8.** Matériau d'emballage imprimé selon l'une quelconque des revendications 5 à 7, dans lequel le matériau d'emballage est un récipient ou un élément de fermeture de récipient.

**9.** Matériau d'emballage imprimé selon l'une quelconque des revendications 5 à 8, dans lequel la couche d'encre imprimée est appliquée à la surface extérieure de l'élément d'emballage par impression offset.

**10.** Procédé d'impression selon la revendication 4, dans lequel l'encre d'impression est aspirée et est délivrée à la plaque d'impression en utilisant un rouleau gravé.

FIG.1

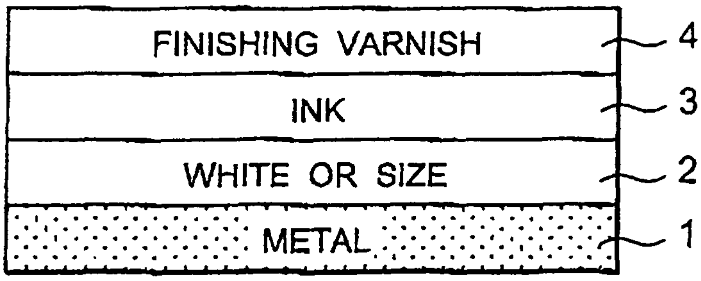


FIG.2

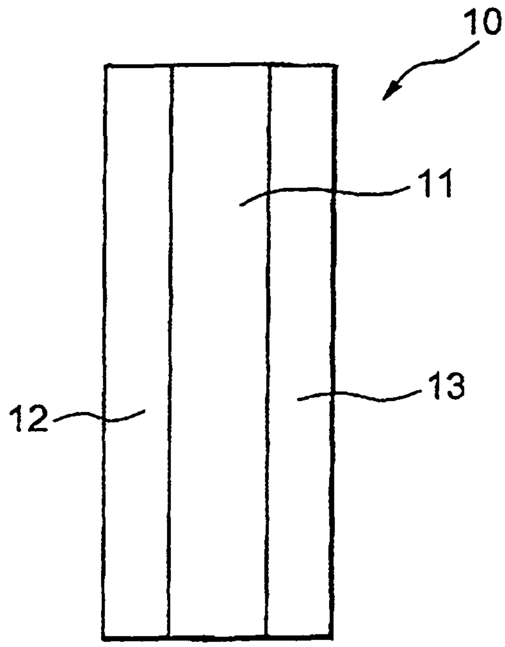

FIG.3

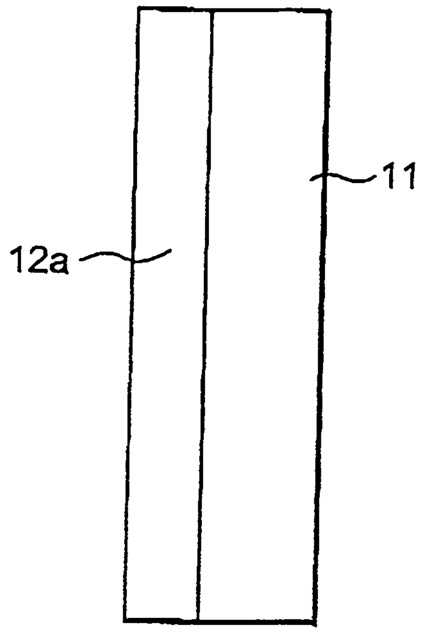
11
12a

FIG.4

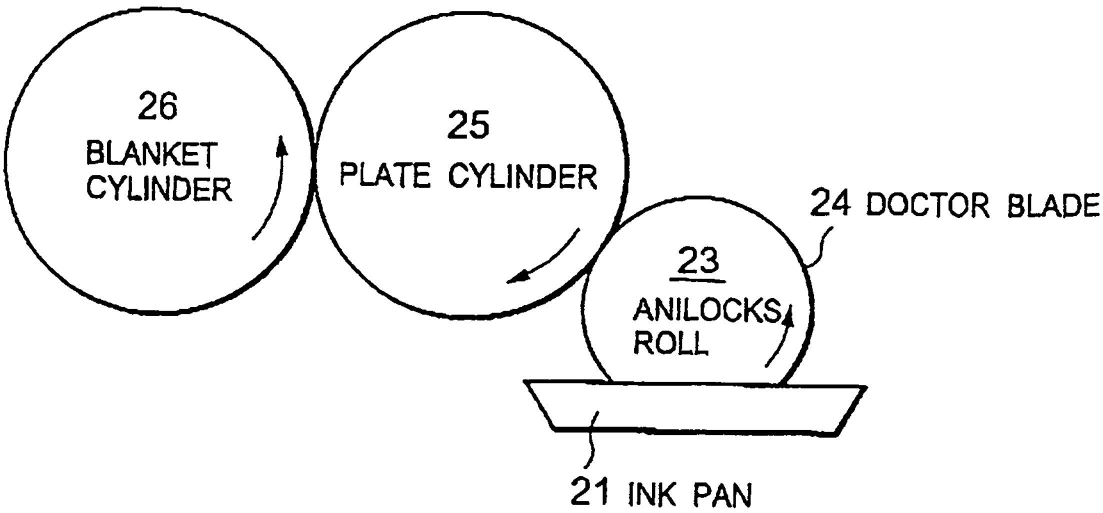
26
BLANKET
CYLINDER
25
PLATE CYLINDER
24 DOCTOR BLADE
23
ANILOCKS
ROLL
21 INK PAN

FIG.5

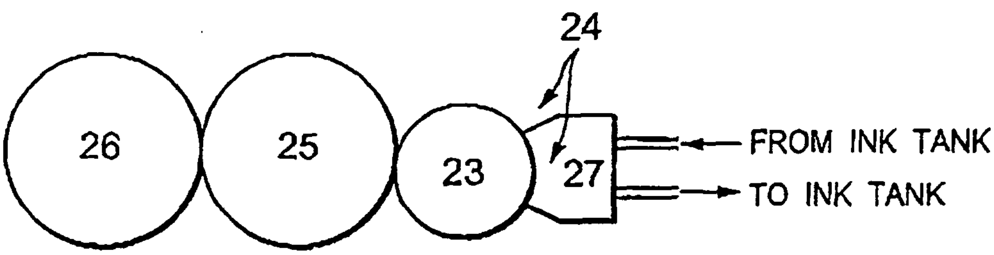


SCHEMATIC DIAGRAM OF PRINTER